# EUROPÄISCHE PATENTSCHRIFT

(11) **EP 3 154 688 B1**
(45) Veröffentlichungstag und Bekanntmachung des Hinweises auf die Patenterteilung: **11.08.2021**
(21) Anmeldenummer: 15729155.0
(22) Anmeldetag: 15.06.2015
(51) Int. Cl.: B01J 31/02

(54) **VERNETZUNGSKATALYSATOR MIT SILOXAN-STRUKTUREINHEITEN**
CROSS-LINKING CATALYST COMPRISING SILOXANE STRUCTURAL UNITS
CATALYSEUR DE RÉTICULATION À MOTIFS CONSTITUTIFS SILOXANE

(30) Priorität: 16.06.2014 EP 14172599
(43) Veröffentlichungstag der Anmeldung: 19.04.2017
(73) Patentinhaber: Sika Technology AG, 6340 Baar (CH)
(72) Erfinder: BURCKHARDT, Urs, 8049 Zürich (CH); CANNAS, Rita, 8600 Dübendorf (CH)
(74) Vertreter: Sika Patent Attorneys
(86) Internationale Anmeldenummer: PCT/EP2015/063253
(87) Internationale Veröffentlichungsnummer: WO 2015/193208

(56) Entgegenhaltungen:
- JP-A- 2010 214 345
- US-A1- 2011 046 299
- JOÃO M. BALBINO ET AL: "Silica-supported guanidine catalyst for continuous flow biodiesel production", GREEN CHEMISTRY, Bd. 13, Nr. 11, 1. Januar 2011 (2011-01-01), Seite 3111, XP055138807, ISSN: 1463-9262, DOI: 10.1039/c1gc15727b
- M. G. VORONKOV ET AL: "Mono- and Bis-N-[3-(triorganylsilyl)propyl]guanidine s and Their Derivatives", RUSSIAN JOURNAL OF GENERAL CHEMISTRY, Bd. 73, Nr. 8, 1. August 2003 (2003-08-01) , Seiten 1239-1242, XP055138816, ISSN: 1070-3632, DOI: 10.1023/B:RUGC.0000007647.85473.44
- None

## Beschreibung

### Technisches Gebiet

Die Erfindung betrifft Katalysatoren für härtbare Zusammensetzungen, insbesondere für Silangruppen-haltige Zusammensetzungen.

### Stand der Technik

Härtbare Zusammensetzungen spielen eine bedeutende Rolle in vielen technischen Anwendungen, beispielsweise als Klebstoffe, Dichtstoffe oder Beschichtungen. Ihre Aushärtung wird durch Vernetzungsreaktionen bewirkt, welche über freie oder latente Reaktivgruppen wie beispielsweise Isocyanatgruppen, Epoxidgruppen, Hydroxylgruppen, Aminogruppen oder Silangruppen ablaufen, wobei diese nach einem Mischvorgang, durch Erwärmen oder durch Kontakt mit Feuchtigkeit mit sich selbst oder untereinander reagieren und so die in der Zusammensetzung enthaltenen Aufbaukomponenten kovalent zu einem polymeren Netzwerk verbinden. Zur Beschleunigung solcher Vernetzungsreaktionen werden häufig Katalysatoren eingesetzt. Sehr oft handelt es sich dabei um toxikologisch bedenkliche Stoffe, welche eine potentielle Gefährdung von Verarbeiter und Umwelt darstellen, insbesondere nach der Aushärtung der Zusammensetzung, wenn der Katalysator oder dessen Abbauprodukte durch Ausgasen, Migration oder Auswaschen freigesetzt werden.

Bei Raumtemperatur härtbare Zusammensetzungen auf Basis von Silangruppen-haltigen Polymeren sind ausgeprägt mit dieser Problemstellung konfrontiert. Silangruppen-haltige Polymere sind dabei insbesondere Polyorganosiloxane, welche gemeinhin als "Silicon-Polymere" bzw. "Silicone" bzw. "Siliconkautschuke" bezeichnet werden, und Silangruppen-haltige organische Polymere, welche auch als "silanfunktionelle Polymere", "silanmodifizierte Polymere" (SMP) oder "silanterminierte Polymere" (STP) bezeichnet werden. Ihre Vernetzung verläuft über die Kondensation von Silanolgruppen unter Ausbildung von Siloxanbindungen und wird klassischerweise mittels Organozinn-Verbindungen, wie insbesondere Dialkylzinn(IV)-carboxylaten, katalysiert. Diese zeichnen sich durch eine sehr hohe Aktivität in Bezug auf die Silanol-Kondensation aus und sind sehr hydrolysebeständig; allerdings sind sie gesundheitsschädlich und stark wassergefährdend. Oft werden sie mit weiteren Katalysatoren kombiniert, hauptsächlich mit basischen Verbindungen wie insbesondere Aminen, welche vor allem die vorgeschaltete Hydrolyse der Silangruppen beschleunigen.

Aufgrund einer stärkeren Gewichtung von EHS-Aspekten durch Berufsverbände und Verbraucher sowie schärferer staatlicher Regulierung werden seit einiger Zeit vermehrt Anstrengungen unternommen, die Organozinn-Verbindungen durch andere, weniger toxische Katalysatoren zu ersetzen. So wurden etwa Organotitanate, -zirkonate und -aluminate als alternative Metall-Katalysatoren beschrieben. Diese haben aber zumeist eine geringere katalytische Aktivität in Bezug auf die Silanol-Kondensation und bewirken eine deutlich langsamere Vernetzung. Wegen ihrer mangelnden Hydrolysestabilität können sie beim Lagern der Zusammensetzung durch Restfeuchte der Inhaltsstoffe einen Grossteil ihrer Aktivität verlieren, wodurch sich die Aushärtung stark verlangsamt oder ganz zum Erliegen kommt.

Eine weitere bekannte Alternative zu Organozinn-Verbindungen stellen stark basische Stickstoff-Verbindungen aus der Klasse der Amidine und Guanidine dar, welche in Kombination mit den erwähnten Metall-Katalysatoren oder auch allein eingesetzt werden können.

Beispielsweise offenbart US 2011/046229 A1 Polykondensationsreaktionen von Polysiloxanen in Gegenwart von silylierten Guanidinen als Vernetzungskatalysatoren.

Viele der gebräuchlichen Amidin- und Guanidin-Katalysatoren, wie insbesondere 1,8-Diazabicyclo[5.4.0]undec-7-en (DBU) und 1,1,3,3-Tetramethylguanidin (TMG), sind allerdings leichtflüchtige und geruchsintensive sowie ebenfalls gesundheitsschädliche und umweltgefährdende Stoffe. Ausserdem neigen sie dazu, aufgrund geringer Verträglichkeit in der Zusammensetzung zu migrieren und dadurch Separation, Ausschwitzen oder Substratverschmutzung zu verursachen. Die beschriebene Verwendung von aromatischen, bei Raumtemperatur festen Amidinen und Guanidinen schafft hier Abhilfe, erfordert aber den Einsatz von geeigneten Lösemitteln und bringt Einbussen bei der katalytischen Aktivität und damit der Vernetzungsgeschwindigkeit.

### Darstellung der Erfindung

Aufgabe der vorliegenden Erfindung ist es daher, einen Katalysator für die Vernetzung von härtbaren Zusammensetzungen, insbesondere Silangruppen-haltigen Zusammensetzungen, bereitzustellen, welcher eine hohe katalytische Aktivität für die Vernetzungsreaktion besitzt und damit eine rasche Aushärtung der applizierten Zusammensetzung ermöglicht, sowie eine hohe Selektivität für diese Vernetzungsreaktion aufweist und somit die Lagerstabilität der Zusammensetzung nicht über Gebühr beeinträchtigt. Weiterhin soll der Katalysator einen geringen Dampfdruck und eine hohe Verträglichkeit mit der Zusammensetzung aufweisen, so dass er weder zu Separierung oder Migration noch zum Verdampfen neigt, soll möglichst geruchlos und wenig toxisch sein und soll bei Raumtemperatur flüssig sein, so dass er auch ohne Lösemittel eingesetzt werden kann.

Diese Aufgabe wird durch einen Katalysator nach Anspruch 1 gelöst. Im Gegensatz zu vielen aus dem Stand der Technik bekannten Amidin- oder Guanidin-Katalysatoren ist er bei Raumtemperatur geruchlos und flüssig. Er weist einen sehr niedrigen Dampfdruck auf und zeigt eine sehr hohe katalytische Aktivität bei guter Selektivität, insbesondere in Silangruppen-haltigen Zusammensetzungen. Dies ist besonders überraschend, würde man doch aufgrund seines relativ hohen Molekulargewichtes eine verminderte Aktivität im Vergleich mit kleinen und somit mobileren Amidinen oder Guanidinen erwarten. Mit diesen Eigenschaften ist der Katalysator nach Anspruch 1 hervorragend geeignet für die Verwendung in härtbaren Zusammensetzungen, insbesondere Silangruppen-haltigen Zusammensetzungen, wo er als alleiniger Katalysator oder in Kombination mit weiteren Katalysatoren eine schnelle Aushärtung zu einem mechanisch hochwertigen und beständigen Material ermöglicht, ohne die Lagerfähigkeit der unausgehärteten Zusammensetzung zu beeinträchtigen. Überraschenderweise ist er sowohl vor als auch nach der Aushärtung ausgezeichnet verträglich mit der Zusammensetzung und neigt weder zu Separierung noch zu Migration. Er ermöglicht emissions- und geruchsarme Produkte, welche weder schmierige oder klebrige Oberflächen aufweisen noch Substratverschmutzung verursachen. Schliesslich ist der Katalysator nach Anspruch 1 in einem überraschend einfachen und schnellen Verfahren ohne Hilfsstoffe aus handelsüblichen Ausgangsmaterialien herstellbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Katalysator enthaltend mindestens eine Amidin- oder Guanidingruppe der Formel (la) oder (Ib), welche an ein Siliciumatom eines Siloxan-Rests gebunden ist, 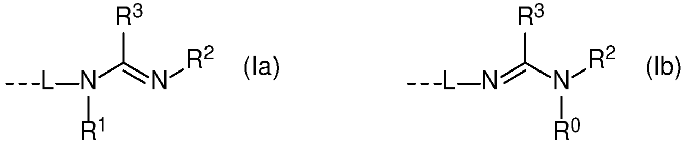 wobei
L für einen linearen oder verzweigten, zweiwertigen Kohlenwasserstoff-Rest mit 1 bis 20 C-Atomen, welcher gegebenenfalls ein oder mehrere Stickstoffatome aufweist, steht,
R¹ und R⁰ unabhängig voneinander jeweils für einen Wasserstoff-Rest oder für einen Alkyl- oder Cycloalkyl- oder Aralkyl-Rest mit 1 bis 8 C-Atomen stehen, R² für einen Wasserstoff-Rest oder für einen Alkyl-, Cycloalkyl- oder Aralkyl-Rest mit 1 bis 18 C-Atomen, welcher gegebenenfalls Heteroatome enthält und welcher gegebenenfalls endständige primäre oder sekundäre Aminogruppen aufweist, steht,
R³ für -NHR⁵ oder für einen Wasserstoff-Rest oder für einen Alkyl-, Cycloalkyl-oder Aralkyl-Rest mit 1 bis 12 C-Atomen steht,
R⁵ für einen Wasserstoff-Rest oder für einen Alkyl-, Cycloalkyl- oder Aralkyl-Rest mit 1 bis 18 C-Atomen, welcher gegebenenfalls Heteroatome enthält, steht,
wobei
R¹ auch zusammen mit R² für einen Alkylen-Rest mit 2 bis 6 C-Atomen stehen kann,
R⁰ auch zusammen mit R² für einen Alkylen-Rest mit 3 bis 6 C-Atomen, welcher gegebenenfalls Heteroatome enthält, stehen kann,
R² auch zusammen mit R³ für einen Alkylen-Rest mit 3 bis 6 C-Atomen stehen kann und
R² auch zusammen mit R⁵ für einen Alkylen-Rest mit 2 bis 12 C-Atomen stehen kann, dadurch gekennzeichnet, dass der Siloxan-Rest ein Polysiloxan-Rest A³ der Formel (III) ist, 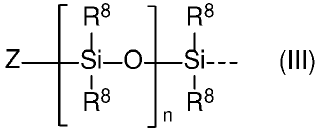 wobei
   n für eine ganze Zahl im Bereich von 10 bis 200 steht,
   R⁸ für einen einwertigen Kohlenwasserstoff-Rest mit 1 bis 12 C-Atomen steht und
   Z für eine Amidin- oder Guanidingruppe der Formel (la) oder (Ib) oder für eine Aminoalkylgruppe oder für einen Rest R⁹ steht, wobei R⁹ für einen einwertigen Alkyl- oder Alkoxy-Rest mit 1 bis 6 C-Atomen steht.

Im vorliegenden Dokument bezeichnet der Begriff "Siloxan-Rest" einen Rest enthaltend mindestens eine Siloxanbindung Si-O-Si.
Als "Polysiloxan-Rest" wird ein Siloxan-Rest enthaltend mehrere Siloxanbindungen in Folge, also Si-(O-Si)ₛ-Einheiten mit s = 2 oder mehr, bezeichnet. Als "Siloxanamin" wird ein Amin bezeichnet, dessen Aminogruppen über einen organischen Rest an ein Siliciumatom eines Siloxan-Rests gebunden sind.
Als "Polysiloxanamin" wird ein Amin bezeichnet, dessen Aminogruppen über einen organischen Rest an ein Siliciumatom eines Polysiloxan-Rests gebunden sind.
Der Begriff "Silangruppe" bezeichnet eine an einen organischen Rest oder an einen Polysiloxan-Rest gebundene Silylgruppe mit einer bis drei, insbesondere zwei oder drei, hydrolysierbaren Substituenten am Siliciumatom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.
Als "Hydroxysilan", "Isocyanatosilan", "Aminosilan" bzw. "Mercaptosilan" werden Organoalkoxysilane bezeichnet, die am organischen Rest zusätzlich zur Silangruppe eine oder mehrere Hydroxyl-, Isocyanato-, Amino- bzw. Mercaptogruppen aufweisen.
Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.
Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen. Polymere mit einem Polyorganosiloxan-Rückgrat (gemeinhin als "Silicone" bezeichnet) stellen keine organischen Polymere im Sinne des vorliegenden Dokuments dar.
Der Begriff "Silangruppen-haltiger Polyether" umfasst auch Silangruppen-haltige organische Polymere, welche zusätzlich zu Polyether-Einheiten noch Urethangruppen, Harnstoffgruppen oder Thiourethangruppen enthalten können. Solche Silangruppen-haltige Polyether können auch als "Silangruppen-haltige Polyurethane" bezeichnet werden.
Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.
Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23 °C bezeichnet.

Der erfindungsgemässe Katalysator kann auch in tautomerer Form vorliegen. Alle möglichen Tautomerformen des erfindungsgemässen Katalysators werden im Rahmen der vorliegenden Erfindung als gleichwertig angesehen.
Weiterhin kann der erfindungsgemässe Katalysator in protonierter Form vorliegen.
Ebenfalls kann der erfindungsgemässe Katalysator in komplexierter Form vorliegen, insbesondere mit Kationen von Zink, Eisen oder Molybdän.
Wenn der erfindungsgemässe Katalysator Alkoxysilangruppen aufweist, kann dieser auch in partiell oder vollständig hydrolysierter Form vorliegen und somit Silanolgruppen enthalten.

Bevorzugt weist der Katalysator 1 bis 20, insbesondere 1 bis 10, Amidin- oder Guanidingruppen der Formel (la) oder (Ib) auf.

Der Siloxan-Rest, an welchen die Amidin- oder Guanidingruppen der Formel (la) oder (Ib) gebunden sind, ist ein Polysiloxan-Rest. Ein solcher Katalysator ist besonders gut verträglich in härtbaren Zusammensetzungen, insbesondere solchen auf Basis von Silicon-Polymeren.
Ein solcher Polysiloxan-Rest kann eine oder mehrere Aminoalkylgruppen enthalten, welche über ein C-Atom direkt an ein Siliciumatom gebunden sind.

Bevorzugt ist der Polysiloxan-Rest A³, an welchen die Amidin- oder Guanidingruppen der Formel (la) oder (Ib) gebunden sind, ein Polysiloxan-Rest mit einem mittleren Molekulargewicht im Bereich von 354 bis 15'000 g/mol. Ein Katalysator mit einem solchen Polysiloxanrest ist typischerweise bei Raumtemperatur flüssig, weist einen geringen Dampfdruck auf, ist besonders gut verträglich in härtbaren Zusammensetzungen auf Basis von Silicon-Polymeren und neigt dabei besonders wenig zu Separierung oder Migration.

Der Polysiloxan-Rest ist linear. Ein Katalysator mit einem linearen Polysiloxan-Rest ist besonders niedrigviskos.
Die bevorzugten Ausführungsformen des erfindungsgemässen Katalysators lassen sich aus handelsüblichen Rohstoffen einfach herstellen und haben besonders gute Eigenschaften in Bezug auf die katalytische Aktivität und Verträglichkeit in härtbaren Zusammensetzungen, insbesondere Silangruppen-haltigen Zusammensetzungen.

Der Siloxan-Rest, an welchen die Amidin- oder Guanidingruppen der Formel (la) oder (Ib) gebunden sind, ist ein Polysiloxan-Rest A³ der Formel (III), 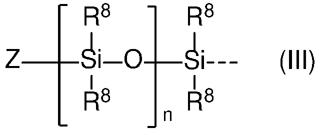 wobei
n für eine ganze Zahl im Bereich von 10 bis 200 steht,
R⁸ die bereits genannten Bedeutungen aufweist und
Z für eine Amidin- oder Guanidingruppe der Formel (la) oder (Ib) oder für eine Aminoalkylgruppe oder für einen Rest R⁹ steht, wobei R⁹ für einen einwertigen Alkyl- oder Alkoxy-Rest mit 1 bis 6 C-Atomen steht.
Ein erfindungsgemässer Katalysator mit einem Polysiloxan-Rest A³ weist also 1 oder 2 Amidin- oder Guanidingruppen der Formel (la) oder (Ib) auf. Bevorzugt steht Z für eine Amidin- oder Guanidingruppe der Formel (la) oder (Ib).
Der Polysiloxan-Rest A³ hat bevorzugt ein mittleres Molekulargewicht im Bereich von 354 bis 15'000 g/mol
Bevorzugt ist ein Polysiloxan-Rest A³ der Formel (III), an welchen 2 Amidin-oder Guanidingruppen der Formel (la) oder (Ib) gebunden sind.
Ein erfindungsgemässer Katalysator mit einem Polysiloxan-Rest A³ weist vorteilhafte Eigenschaften auf. Er ist aus kommerziell verfügbaren Ausgangsmaterialien einfach herstellbar, verfügt über eine überraschend niedrige Viskosität und eine hohe katalytische Aktivität und eine ausgezeichnete Verträglichkeit in härtbaren Zusammensetzungen, insbesondere solchen auf Basis von Silicon-Polymeren.

Der erfindungsgemässe Katalysator enthält mindestens eine Amidin- oder Guanidingruppe der Formel (Ia) oder (Ib), welche an ein Siliciumatom eines Siloxan-Rests gebunden ist. 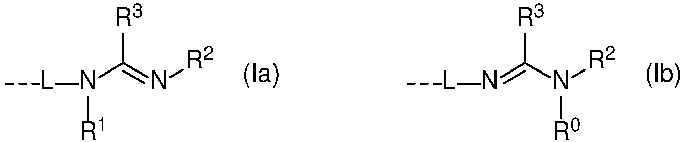 Bevorzugt steht L für einen linearen oder verzweigten, zweiwertigen Kohlenwasserstoff-Rest mit 1 bis 6 C-Atomen, welcher gegebenenfalls ein Stickstoffatom aufweist.
Besonders bevorzugt steht L für einen Rest ausgewählt aus Methylen, 1,3-Propylen, 2-Methyl-1,3-propylen, 1,4-Butylen, 2,2-Dimethyl-2,4-butylen und 3-Aza-1,6-hexylen. Diese Reste sind ausgehend vom Stickstoffatom, an welches der Rest L gebunden ist, nummeriert.
Davon bevorzugt sind 1,3-Propylen und 3-Aza-1,6-hexylen.
R¹ und R⁰ stehen bevorzugt unabhängig voneinander jeweils für einen Wasserstoff-Rest oder für einen Alkyl-Rest mit 1 bis 4 C-Atomen, insbesondere für einen Wasserstoff-Rest.
R² steht bevorzugt für einen Wasserstoff-Rest oder für einen Alkyl-, Cycloalkyl-oder Aralkyl-Rest mit 1 bis 12 C-Atomen, insbesondere 1 bis 8 C-Atomen, welcher gegebenenfalls Heteroatome enthält.
R³ steht bevorzugt für -NHR⁵ oder für einen Wasserstoff-Rest oder für einen Alkyl-, Cycloalkyl- oder Aralkyl-Rest mit 1 bis 8 C-Atomen.
Besonders bevorzugt steht R³ für -NHR⁵.
R⁵ steht bevorzugt für einen Wasserstoff-Rest oder für einen Alkyl-, Cycloalkyl-oder Aralkyl-Rest mit 1 bis 12 C-Atomen, welcher gegebenenfalls ein Sauerstoffatom oder ein Stickstoffatom enthält.
Weiterhin bevorzugt stehen R¹ und R² zusammen für einen Alkylen-Rest mit 2 bis 4 C-Atomen, insbesondere 2 oder 3 C-Atomen.

Weiterhin bevorzugt stehen R² und R⁰ zusammen für einen Alkylen-Rest mit 4 bis 6 C-Atomen, welcher gegebenenfalls Heteroatome enthält.
Weiterhin bevorzugt stehen R² und R³ zusammen für einen Alkylen-Rest mit 3 bis 5 C-Atomen.
Weiterhin bevorzugt stehen R² und R⁵ zusammen für einen Alkylen-Rest mit 2 bis 4 C-Atomen.

In einer Ausführungsform der Erfindung steht im Katalysator R³ für einen Wasserstoff-Rest oder für einen Alkyl-, Cycloalkyl- oder Aralkyl-Rest mit 1 bis 12, bevorzugt 1 bis 8, insbesondere 1 bis 4, C-Atomen, oder R² und R³ stehen zusammen für einen Alkylen-Rest mit 3 bis 6, insbesondere 3 bis 5, C-Atomen. Diese Katalysatoren weisen Amidingruppen der Formel (la) oder (Ib) auf. Ein solcher, Amidingruppen aufweisender Katalysator weist gegenüber einem entsprechenden, Guanidingruppen aufweisenden Katalysator den Vorteil auf, dass er eine nicht ganz so hohe katalytische Aktivität aufweist und deshalb in etwas höherer Menge eingesetzt werden kann, wodurch er weniger anfällig ist für Störungen durch andere Bestandteile in der Zusammensetzung, insbesondere den darin enthaltenen Verunreinigungen.

In einem Amidingruppen aufweisenden Katalysator steht R³ bevorzugt für einen Wasserstoff-Rest oder für Methyl, insbesondere für Methyl.
In einem Amidingruppen aufweisenden Katalysator steht R¹ bevorzugt für einen Wasserstoff-Rest oder zusammen mit R² für 1,2-Ethylen oder 1,3-Propylen.
In einem Amidingruppen aufweisenden Katalysator steht R² bevorzugt für Hexyl, Cyclohexyl, Benzyl, 2-Ethylhexyl, Octyl, Decyl, Dodecyl oder 2-Methoxyethyl, oder zusammen mit R¹ für 1,2-Ethylen oder 1,3-Propylen.
In einem Amidingruppen aufweisenden Katalysator stehen R¹ und R² insbesondere zusammen für 1,2-Ethylen.
In einem Amidingruppen aufweisenden Katalysator steht L insbesondere für 1,3-Propylen.

Die bevorzugten Ausführungsformen der Amidingruppen aufweisenden Katalysatoren zeichnen sich durch eine gute katalytische Aktivität und eine ausgezeichnete Verträglichkeit in härtbaren Zusammensetzungen aus.
Besonders bevorzugt sind Kombinationen mit den einzelnen vorgängig bevorzugten Resten.

In einer bevorzugten Ausführungsform der Erfindung steht im Katalysator R³ für-NHR⁵. Diese Katalysatoren weisen Guanidingruppen auf. Sie zeichnen sich durch eine im Vergleich zu den Amidingruppen aufweisenden Katalysatoren noch höheren katalytischen Aktivität und eine ausgezeichnete Verträglichkeit in härtbaren Zusammensetzungen aus.
Erfindungsgemässe Katalysatoren mit Guanidingruppen sind gegenüber solchen mit Amidingruppen bevorzugt.
In einem Guanidingruppen aufweisenden Katalysator stehen
R² und R⁵ bevorzugt unabhängig voneinander jeweils für einen Alkyl-, Cycloalkyl- oder Aralkyl-Rest mit 1 bis 18 C-Atomen, welcher gegebenenfalls Heteroatome enthält, und
R¹ steht bevorzugt für einen Wasserstoff-Rest.
Die bevorzugten Ausführungsformen der Guanidingruppen aufweisenden Katalysatoren weisen Guanidingruppen der Formel (V) auf, wobei L, R² und R⁵ die bereits genannten Bedeutungen aufweisen. 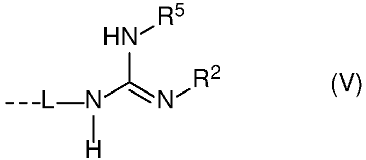 Erfindungsgemässe Katalysatoren mit Guanidingruppen der Formel (V) sind besonders gut herstellbar und weisen eine ganz besonders hohe katalytische Aktivität auf.
R² und R⁵ stehen in der Formel (V) besonders bevorzugt unabhängig voneinander jeweils für Ethyl, Isopropyl, tert.Butyl, 3-(Dimethylamino)propyl oder Cyclohexyl, insbesondere jeweils für Isopropyl oder Cyclohexyl, am meisten bevorzugt jeweils für Cyclohexyl. Diese Katalysatoren sind besonders gut zugänglich.

Besonders bevorzugte Katalysatoren enthalten mindestens eine Guanidingruppe der Formel (V), welche an ein Siliciumatom des Polysiloxan-Rests A³, wie vorgängig beschrieben, gebunden ist.
Diese Katalysatoren weisen eine besonders niedrige Viskosität auf und sind besonders gut verträglich in härtbaren Zusammensetzungen auf Basis von Silicon-Polymeren.

Ein bevorzugter Katalysator weist die Formel (VIII) oder die Formel (IX) auf, 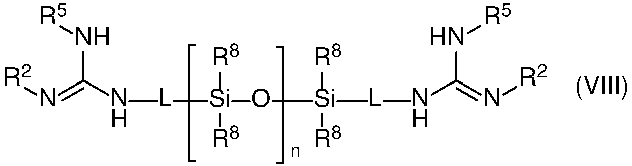 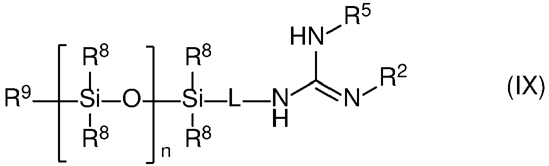 wobei R², R⁵, R⁸, R⁹, L und n die genannten Bedeutungen aufweisen.

Ein erfindungsgemässer Katalysator wird insbesondere erhalten durch die Umsetzung von mindestens einem Siloxanamin mit mindestens einem Reagens zur Einführung einer Amidin- oder Guanidin-Gruppe ausgewählt aus der Gruppe bestehend aus Orthoestern, 1,3-Ketoestern, 1,3-Ketoamiden, Nitrilen, Imidsäureestern, Imidsäurechloriden, Amiden, Lactamen, Cyanamid, Carbodiimiden, Harnstoffen, O-Alkylisoharnstoffen, Thioharnstoffen, S-Alkylisothioharnstoffe, Aminoiminomethansulfonsäuren, Guanylpyrazolen und Guanidinen.

Zur Einführung von Amidingruppen sind Orthoester, 1,3-Ketoester, 1,3-Ketoamide, Nitrile, Imidsäureester, Imidsäurechloride, Amide und Lactame geeignet, insbesondere Orthoester, 1,3-Ketoester und Nitrile.
In einem bevorzugten Verfahren zur Herstellung eines erfindungsgemässen Katalysators, bei welchem R³ für einen Wasserstoff-Rest oder für einen Alkyl-, Cycloalkyl- oder Aralkyl-Rest mit 1 bis 12 C-Atomen steht, wird mindestens ein Siloxanamin mit mindestens einem Orthoester oder mindestens einem 1,3-Ketoester oder mindestens einem Nitril umgesetzt. Dabei entsteht ein Amidingruppen aufweisender Katalysator.

Bevorzugte Orthoester sind Orthoformiate, Orthoacetate, Orthopropionate, Orthobutyrate oder Orthovalerate, insbesondere Trimethylorthoformiat, Triethylorthoformiat, Trimethylorthoacetat oder Triethylorthoacetat.

Bevorzugte 1,3-Ketoester sind Methylacetoacetat, Ethylacetoacetat, Isopropylacetoacetat oder tert.Butylacetoacetat, insbesondere Ethylacetoacetat. Bevorzugte Nitrile sind Acetonitril, Propionitril, Butyronitril, Isobutyronitril, Valeronitril oder Capronitril, insbesondere Acetonitril.

Bevorzugt wird ein Amidingruppen aufweisender Katalysator erhalten durch die Umsetzung von mindestens einem Siloxanamin mit mindestens einem Orthoester der Formel R³-C(OR^{a})₃ und gegebenenfalls mindestens einem Monoamin der Formel R²-NH-R⁰ , insbesondere R²-NH₂, unter Freisetzung von Alkohol R^{a}OH, wobei R³ insbesondere für einen Wasserstoff-Rest oder einen Methyl-Rest steht und R^{a} für einen Alkylrest mit 1 bis 4 C-Atomen steht. Diese Umsetzung wird bevorzugt bei erhöhter Temperatur, insbesondere bei 40 bis 160 °C und besonders bevorzugt bei 60 bis 140 °C, und erhöhtem Druck in Gegenwart eines Katalysators durchgeführt.

Weiterhin bevorzugt wird ein Amidingruppen aufweisender Katalysator erhalten durch die Umsetzung von mindestens einem Siloxanamin und gegebenenfalls mindestens einem Monoamin der Formel R²-NH-R⁰ , insbesondere R²-NH₂, mit mindestens einem 1,3-Ketoester der Formel R³-C(O)CH₂C(O)OR^{a}, wobei R³ insbesondere für einen Methyl-Rest steht und R^{a} für einen Alkylrest mit 1 bis 4 C-Atomen steht. Diese Umsetzung wird bevorzugt bei einer Temperatur von 20 bis 100 °C, insbesondere 40 bis 80 °C, durchgeführt, wobei der freigesetzte Ester CH₃C(O)OR^{a} bevorzugt destillativ entfernt wird. Bevorzugt wird dabei ein Katalysator eingesetzt, insbesondere eine Säure, bevorzugt eine Sulfonsäure. Dafür bevorzugte Monoamine sind n-Hexylamin, Cyclohexylamin, Benzylamin, 2-Ethylhexylamin, n-Octylamin, n-Decylamin, Laurylamin oder 2-Methoxyethylamin.

Die Umsetzung kann einstufig oder mehrstufig erfolgen.

Das Reaktionsprodukt aus diesem Verfahren wird bevorzugt ohne Aufarbeitung und/oder Reinigung als Katalysator verwendet, mit Ausnahme der destillativen Entfernung von flüchtigen Verbindungen, gegebenenfalls unter Vakuum. Beim Einsatz von beispielsweise Siloxandiaminen entstehen typischerweise Gemische, welche neben dem gewünschten Katalysator oligomere Nebenprodukte mit mehreren Amidingruppen enthalten. Die Umsetzung erfolgt dann bevorzugt so, dass auf 1 mol Orthoester oder 1,3-Ketoester mindestens 2 mol Siloxandiamin eingesetzt werden, um die Nebenproduktbildung gering zu halten. Die dabei erhaltenen Katalysatoren enthalten Aminoalkylgruppen. Werden neben beispielsweise Siloxandiaminen zusätzlich Monoamine eingesetzt, erhält man ebenfalls weniger oligomere Nebenprodukte. Die Umsetzung erfolgt in diesem Fall bevorzugt so, dass auf 1 mol Siloxandiamin mindestens 2 mol Orthoester oder 1,3-Ketoester und mindestens 2 mol Monoamin eingesetzt werden.

Beim Einsatz von Siloxanaminen, welche Aminoalkylgruppen mit einer primären und einer sekundären Aminogruppe, welche durch eine 1,2-Ethylen- oder 1,3-Propylengruppe voneinander getrennt sind, enthalten, erfolgt die Umsetzung bevorzugt so, dass auf jede solche Aminoalkylaminogruppe ungefähr 1 mol Orthoester oder 1,3-Ketoester eingesetzt wird. Dabei wird ein Katalysator enthaltend mindestens eine Amidingruppe erhalten, bei welchem R¹ und R² zusammen für 1,2-Ethylen oder für 1,3-Propylen stehen.

In der folgenden Formel ist eine Amidingruppen-haltige Struktureinheit in Form eines Umsetzungsprodukt aus Orthoacetat und einer eine N-(2-Aminoethyl)-3-aminoprop-1-yl Gruppe aufweisenden Struktureinheit beispielhaft dargestellt.

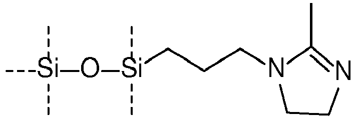

Zur Einführung von Guanidingruppen sind Cyanamide, Carbodiimide, Harnstoffe, O-Alkylisoharnstoffe, Thioharnstoffe, S-Alkylisothioharnstoffe, Aminoiminomethansulfonsäuren, Guanylpyrazole oder Guanidine geeignet. Bevorzugt sind Cyanamide oder Carbodiimide.

Besonders bevorzugt sind Carbodiimide. Auf diesem Weg sind besonders aktive Katalysatoren auf besonders einfache Weise erhältlich.

In einem besonders bevorzugten Verfahren wird ein Katalysator, bei welchem R³ für -NHR⁵ steht, erhalten durch die Umsetzung von mindestens einem Siloxanamin mit mindestens einem Carbodiimid der Formel R⁵-N=C=N-R², wobei R² und R⁵ die bereits beschriebenen Bedeutungen aufweisen. Dabei entsteht ein Guanidingruppen aufweisender Katalysator.

Die Umsetzung des Siloxanamins mit dem Carbodiimid wird bevorzugt bei erhöhter Temperatur, insbesondere bei 40 bis 160 °C und besonders bevorzugt bei 60 bis 140 °C durchgeführt. Die Umsetzung kann ganz ohne die Verwendung von VOC-Lösemitteln erfolgen. Zur Beschleunigung der Umsetzung kann ein Katalysator eingesetzt werden, insbesondere eine Säure wie z.B. eine Carbonsäure oder Kohlensäure, oder eine Lewis-Säure wie z.B. Bortrifluorid-Etherat, Aluminiumchlorid, Aluminiumacetylacetonat, Eisen(III)chlorid, Lithiumperchlorat, Zinkchlorid, Zinkacetat, Zinkneodecanoat, Zinkacetylacetonat, Zinktriflat oder Lanthantriflat.

Die Umsetzung kann einstufig oder mehrstufig erfolgen.

Bei der Umsetzung wird bevorzugt soviel Carbodiimid eingesetzt, dass pro Equivalent Guanidingruppe, die gebildet werden soll, höchstens ein mol Carbodiimid vorhanden ist.

Insbesondere wird das Carbodiimid stöchiometrisch in Bezug auf die primären Aminogruppen des Siloxanamins eingesetzt. Auf diese Weise ist der erhaltene Katalysator weitgehend frei von primären Aminogruppen.

Das Reaktionsprodukt aus diesem Verfahren wird bevorzugt ohne Aufarbeitung und/oder Reinigung verwendet.

Als Carbodiimid eignen sich typischerweise aliphatische, cycloaliphatische oder arylaliphatische Carbodiimide, insbesondere einfache, im Handel erhältliche aliphatische und cycloaliphatische Carbodiimide, bevorzugt N,N'-Diisopropylcarbodiimid (DIC), N,N'-Di-tert.butylcarbodiimid, N,N'-Dicyclohexylcarbodiimid (DCC) oder N-Ethyl-N'-(3-dimethylaminopropyl)carbodiimid (EDC), besonders bevorzugt N,N'-Diisopropylcarbodiimid (DIC) oder N,N'-Dicyclohexylcarbodiimid (DCC), insbesondere DCC.

Für die Herstellung der beschriebenen Katalysatoren geeignete Siloxanamine enthalten mindestens eine Aminogruppe der Formel ---L—NHR¹ , welche an ein Siliciumatom eines Siloxan-Rests gebunden ist. L und R¹ weisen dabei die genannten Bedeutungen auf.
Das Siloxanamin ist ein Polysiloxanamin.

Bevorzugt ist ein Polysiloxanamin der Formel (XII) oder (XIII), 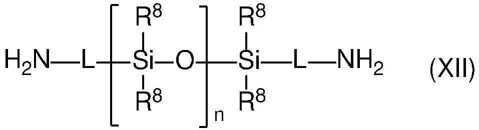 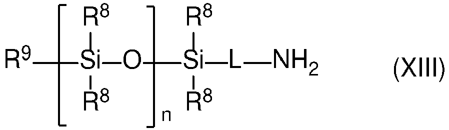 wobei n, L, R⁸ und R⁹ die bereits genannten Bedeutungen aufweisen. Diese Polysiloxanamine sind insbesondere Aminoalkyl-terminierte Silikonöle.

Geeignete Polysiloxanamine sind kommerziell erhältlich, beispielsweise als Dynasylan® 1146 (von Evonik), Silquest® Y15744 (von Momentive), X-40-2651 (von Shin-Etsu), Z-6184 Silane (von Dow Corning), Silaplane® FM-3311, Silaplane® FM-3322, Silaplane® FM-3325 (alle von Chisso), Wacker® Aminöl SLM 92502, Wacker® Aminöl SLM 92503, Wacker® Aminöl SLM 92507, Wacker® Aminöl SLM 446011-20 VP, Wacker® Aminöl SLM 446011-50 VP, Wacker® L 653, Wacker® L 655, Wacker® L 656, Wacker® FINISH WR 1100, Wacker® FINISH WT 1650 (alle von Wacker) oder als Reactive Silicone Fluids KF-393, KF-857, KF-858, KF-859, KF-860, KF-861, KF-862, KF-864, KF-865, KF-867, KF-868, KF-869, KF-880, KF-8001, KF-8002, KF-8004, KF-8005, X-22-3820W, KF-8008, KF-8010, KF-8012, X-22-161 A, X-22-161 B, X-22-1660B-3, X-22-9192 (alle von Shin Etsu).

Ebenfalls geeignet sind aminopropylierte Polysiloxanamine, wie sie durch Umsetzen handelsüblicher Polysiloxanamine mit Acrylnitril und nachfolgender Hydrierung erhältlich sind.

Das Siloxanamin für die Herstellung eines erfindungsgemässen Katalysators ist bevorzugt ausgewählt aus der Gruppe bestehend aus
- einem Polysiloxanamin der Formel (XII), und
- einem Polysiloxanamin der Formel (XIII).

In einer bevorzugten Ausführungsform dieses Verfahrens zur Herstellung eines erfindungsgemässen Katalysators wird dieser in-situ in Gegenwart eines Silangruppen-haltigen Polymers hergestellt. Dazu werden das Siloxanamin und das Reagens zur Einführung einer Amidin- oder Guanidin-Gruppe mit einem Silangruppen-haltigen Polymer vermischt und bei einer Temperatur im Bereich von 40 bis 120 °C umgesetzt. Eine solche in-situ Umsetzung kann insbesondere auch in Gegenwart weiterer Inhaltsstoffe, wie sie für Zusammensetzungen auf Basis von Silangruppen-haltigen Polymeren typisch sind, durchgeführt werden. Bei einer in-situ Herstellung des Katalysators entsteht dieser erst mit einer gewissen zeitlichen Verzögerung, was in der Praxis einen Vorteil darstellen kann. Besonders bevorzugt ist das in-situ Verfahren für die Herstellung eines Guanidingruppen aufweisenden Katalysators aus der Umsetzung eines Siloxanamins mit einem Carbodiimid.

Der erfindungsgemässe Katalysator kann insbesondere zur Beschleunigung der Vernetzung von härtbaren Zusammensetzungen eingesetzt werden. Beispiele für geeignete härtbare Zusammensetzungen sind Epoxidharz-Zusammensetzungen, insbesondere heisshärtende, über Dicyandiamid oder Carbonsäuren oder Carbonsäureanhydride vernetzende Systeme, wie sie beispielsweise in Klebstoffen, Beschichtungen und Giessharzen eingesetzt werden; Polyurethan-Zusammensetzungen, insbesondere zweikomponentige, durch Reaktion von Polyolen mit Isocyanaten vernetzende Systeme, wie sie beispielsweise für Klebstoffe, Beläge, Vergussmassen, Dichtfugen, Formkörper oder Blockschäume eingesetzt werden, sowie einkomponentige Systeme mit blockierten Isocyanatgruppen oder blockierten Aminogruppen, wie sie beispielsweise in Pulverlacken, Coil Coatings, Elektrotauchlacken und Flüssiglacken eingesetzt werden; Epoxidharz-Polyurethan-Hybridsysteme; Cyanatesterharz-Zusammensetzungen; sowie Silangruppen-haltige Zusammensetzungen.
Besonders vorteilhaft ist die Verwendung in Silangruppen-haltigen Zusammensetzungen, wobei diese auch bei relativ geringer Konzentration des erfindungsgemässen Katalysators rasch aushärten und nicht zu migrationsbedingten Fehlern wie Separation, Ausschwitzen oder Substratverschmutzung neigen.

Dementsprechend betrifft die Erfindung auch die Verwendung eines erfindungsgemässen Katalysators in einer härtbaren Zusammensetzung, insbesondere einer Silangruppen-haltigen Zusammensetzung, als Vernetzungskatalysator. Die härtbare Zusammensetzung stellt dabei insbesondere einen Klebstoff, einen Dichtstoff oder eine Beschichtung dar.

Ein weiterer Gegenstand der Erfindung ist eine härtbare Zusammensetzung enthaltend mindestens einen erfindungsgemässen Katalysator, wie vorgängig beschrieben.
Eine solche Zusammensetzung enthält zusätzlich insbesondere mindestens ein Epoxidharz oder mindestens ein Polyisocyanat oder mindestens ein blockiertes Isocyanat oder mindestens ein Cyanesterharz oder mindestens ein Silangruppen-haltiges Polymer.

Bevorzugt enthält die härtbare Zusammensetzung zusätzlich zum erfindungsgemässen Katalysator mindestens ein Silangruppen-haltiges Polymer. Bevorzugt ist das Silangruppen-haltige Polymer ausgewählt aus der Gruppe bestehend aus Polysiloxanen mit endständigen Silangruppen und Silangruppen-haltigen organischen Polymeren.

Ein Polyorganosiloxan mit endständigen Silangruppen weist den Vorteil auf, dass es im ausgehärteten Zustand besonders wasser- und lichtbeständig ist und besonders weichelastische Eigenschaften ermöglicht.
Ein Silangruppen-haltiges organisches Polymer weist den Vorteil auf, dass es besonders gute Haftungseigenschaften auf einer Vielzahl von Untergründen aufweist und besonders kostengünstig ist.

Das Silangruppen-haltige Polymer ist in einer bevorzugten Ausführungsform ein Polysiloxan mit endständigen Silangruppen, im Folgenden "reaktives Silicon-Polymer" genannt, welches bevorzugt die Formel (XV) aufweist, 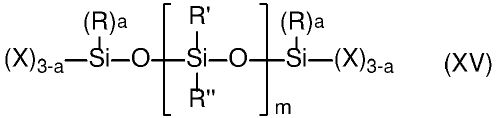 wobei
R, R' und R" unabhängig voneinander jeweils für einen einwertigen Kohlenwasserstoff-Rest mit 1 bis 12 C-Atomen stehen;
X für einen Hydroxyl-Rest oder für einen Alkoxy-, Acetoxy-, Ketoximato-, Amido- oder Enoxy-Rest mit 1 bis 13 C-Atomen steht;
a für 0, 1 oder 2 steht; und
m für eine ganze Zahl im Bereich von 50 bis etwa 2'500 steht.
R steht bevorzugt für Methyl, Vinyl oder Phenyl.
R' und R" stehen bevorzugt unabhängig voneinander jeweils für einen Alkyl-Rest mit 1 bis 5, bevorzugt 1 bis 3 C-Atomen, insbesondere für Methyl.
X steht bevorzugt für einen Hydroxyl-Rest oder für einen Alkoxy- oder Ketoximato-Rest mit 1 bis 6 C-Atomen, insbesondere für einen Hydroxyl-, Methoxy-, Ethoxy-, Methylethylketoximato- oder Methylisobutylketoximato-Rest. Besonders bevorzugt steht X für einen Hydroxyl-Rest.
a steht bevorzugt für 0 oder 1, insbesondere für 0.

Weiterhin ist m bevorzugt so gewählt, dass das reaktive Silicon-Polymer der Formel (XV) bei Raumtemperatur eine Viskosität im Bereich von 100 bis 500'000 mPa·s, insbesondere von 1000 bis 100'000 mPa·s, aufweist.

Solche reaktiven Silicon-Polymere sind gut handhabbar und vernetzen mit Feuchtigkeit und/oder Silanvernetzern zu festen Silicon-Polymeren mit elastischen Eigenschaften.

Geeignete kommerziell erhältliche reaktive Silicon-Polymere sind beispielsweise erhältlich von Wacker, Momentive Performance Material, GE Advanced Materials, Dow Corning, Bayer oder Shin Etsu.

Bevorzugt enthält die härtbare Zusammensetzung zusätzlich zu einem reaktiven Silicon-Polymer einen Silanvernetzer, insbesondere ein Silan der Formel (XVI),

(R'")ₜ-Si-(X')₄₋ₜ (XVI)

wobei
R'" für einen einwertigen Kohlenwasserstoff-Rest mit 1 bis 12 C-Atomen steht, X' für einen Hydroxyl-Rest oder für einen Alkoxy-, Acetoxy-, Ketoximato-, Amido- oder Enoxy-Rest mit 1 bis 13 C-Atomen steht; und
t für einen Wert von 0, 1 oder 2, insbesondere für 0 oder 1, steht.
Besonders geeignete Silane der Formel (XVI) sind Methyltrimethoxysilan, Ethyltrimethoxysilan, Propytrimethoxysilan, Vinyltrimethoxysilan, Methyltriethoxysilan, Vinyltriethoxysilan, Phenyltriethoxysilan, Tetramethoxysilan, Tetraethoxysilan, Methyltris(methylethylketoximo)silan, Vinyltris(methylethyl-ketoximo)silan und Methyltris(isobutylketoximo)silan.

Das Silangruppen-haltige Polymer ist in einer weiteren bevorzugten Ausführungsform der Erfindung ein Silangruppen-haltiges organisches Polymer, insbesondere ein Polyolefin, Polyester, Polyamid, Poly(meth)acrylat oder Polyether oder eine Mischform dieser Polymere, welches jeweils eine oder bevorzugt mehrere Silangruppen trägt. Die Silangruppen können seitlich in der Kette oder endständig stehen.
Besonders bevorzugt ist das Silangruppen-haltige organische Polymer ein Silangruppen-haltiges Polyolefin oder ein Silangruppen-haltiger Polyester oder ein Silangruppen-haltiges Poly(meth)acrylat oder ein Silangruppen-haltiger Polyether oder eine Mischform dieser Polymere. Am meisten bevorzugt ist ein Silangruppen-haltiger Polyether.
Als Silangruppen am organischen Polymer bevorzugt sind Alkoxysilangruppen, insbesondere Endgruppen der Formel (XVII), 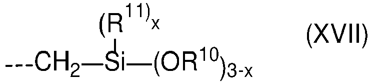 wobei
R¹⁰ für einen linearen oder verzweigten, einwertigen Kohlenwasserstoff-Rest mit 1 bis 5 C-Atomen, insbesondere für Methyl oder für Ethyl oder für Isopropyl, steht;
R¹¹ für einen linearen oder verzweigten, einwertigen Kohlenwasserstoff-Rest mit 1 bis 8 C-Atomen, insbesondere für Methyl oder für Ethyl, steht; und x für 0 oder 1 oder 2, bevorzugt für 0 oder 1, insbesondere für 0, steht. Besonders bevorzugt steht R¹⁰ für Methyl oder für Ethyl.

Besonders bevorzugt sind Trimethoxysilangruppen, Dimethoxymethylsilangruppen oder Triethoxysilangruppen.

Dabei weisen Methoxysilangruppen den Vorteil auf, dass sie besonders reaktiv sind, und Ethoxysilangruppen weisen den Vorteil auf, dass sie toxikologisch vorteilhaft und besonders lagerstabil sind.

Das Silangruppen-haltige organische Polymer weist im Mittel bevorzugt 1.3 bis 4, insbesondere 1.5 bis 3, besonders bevorzugt 1.7 bis 2.8 Silangruppen pro Molekül auf. Die Silangruppen sind bevorzugt endständig.

Das Silangruppen-haltige organische Polymer weist bevorzugt ein mittleres Molekulargewicht, bestimmt mittels GPC gegenüber Polystyrol-Standard, im Bereich von 1000 bis 30'000 g/mol, insbesondere von 2000 bis 20'000 g/mol, auf. Das Silangruppen-haltige organische Polymer weist bevorzugt ein Silan-Equivalentgewicht von 300 bis 25'000 g/Eq, insbesondere von 500 bis 15'000 g/Eq, auf.

Das Silangruppen-haltige organische Polymer kann bei Raumtemperatur fest oder flüssig vorliegen. Bevorzugt ist es bei Raumtemperatur flüssig.

Meist bevorzugt handelt es sich beim Silangruppen-haltigen organischen Polymer um einen bei Raumtemperatur flüssigen Silangruppen-haltigen Polyether, wobei die Silangruppen insbesondere Dialkoxysilangruppen und/oder Trialkoxysilangruppen, besonders bevorzugt Trimethoxysilangruppen oder Triethoxysilangruppen, sind.

Verfahren zur Herstellung von Silangruppen-haltigen Polyethern sind dem Fachmann bekannt.
In einem Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.
In einem weiteren Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.
In einem weiteren Verfahren sind Silangruppen-haltige Polyether erhältlich aus der Umsetzung von Polyetherpolyolen mit Isocyanatosilanen, gegebenenfalls unter Kettenverlängerung mit Diisocyanaten.
In einem weiteren Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, ein niedriges Elastizitätsmodul, ein tiefer Glasübergangspunkt oder eine hohe Witterungsbeständigkeit.

Besonders bevorzugt ist der Silangruppen-haltige Polyether erhältlich aus der Umsetzung von NCO-terminierten Urethan-Polyethern mit Aminosilanen oder Hydroxysilanen. Geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.

Bevorzugt wird die Umsetzung zwischen dem Polyisocyanat und dem Polyetherpolyol unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt.

Bevorzugte Diisocyanate sind ausgewählt aus der Gruppe bestehend aus 1,6-Hexamethylendiisocyanat (HDI), 1-Isocyanato-3,3,5-trimethyl-5-isocyanatomethyl-cyclohexan (=lsophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden Silangruppen-haltige Polyether mit besonders guter Lichtechtheit erhalten. Speziell geeignet als Polyetherpolyole sind Polyoxyalkylendiole oder Polyoxyalkylentriole mit einem Ungesättigtheitsgrad tiefer als 0.02 mEq/g, insbesondere tiefer als 0.01 mEq/g, und einem mittleren Molekulargewicht im Bereich von 400 bis 25'000 g/mol, insbesondere 1000 bis 20'000 g/mol.

Neben Polyetherpolyolen können anteilig auch andere Polyole eingesetzt werden, insbesondere Polyacrylatpolyole, sowie niedrigmolekulare Diole oder Triole.

Geeignete Aminosilane für die Umsetzung mit einem NCO-terminierten Urethan-Polyether sind primäre und sekundäre Aminosilane. Bevorzugt sind 3-Aminopropyltrimethoxysilan, 3-Aminopropyldimethoxymethylsilan, 4-Aminobutyltrimethoxysilan, 4-Amino-3-methylbutyltrimethoxysilan, 4-Amino-3,3-dimethylbutyltrimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilylpropyl)aminobernsteinsäuredimethyl- oder -diethylester. Ebenfalls geeignet sind Analoga der genannten Aminosilane mit Ethoxy- oder Isopropoxygruppen anstelle der Methoxygruppen am Silicium.

Geeignete Hydroxysilane für die Umsetzung mit einem NCO-terminierten Urethan-Polyether sind insbesondere erhältlich aus der Addition von Aminosilanen an Lactone oder an cyclische Carbonate oder an Lactide.

Dafür geeignete Aminosilane sind insbesondere 3-Aminopropyl-trimethoxysilan, 3-Aminopropyl-triethoxysilan, 4-Aminobutyl-trimethoxysilan, 4-Aminobutyl-triethoxysilan, 4-Amino-3-methylbutyl-trimethoxysilan, 4-Amino-3-methylbutyl-triethoxysilan, 4-Amino-3,3-dimethylbutyl-trimethoxysilan, 4-Amino-3,3-dimethylbutyl-triethoxysilan, 2-Aminoethyl-trimethoxysilan oder 2-Aminoethyltriethoxysilan. Besonders bevorzugt sind 3-Aminopropyl-trimethoxysilan, 3-Aminopropyl-triethoxysilan, 4-Amino-3,3-dimethylbutyl-trimethoxysilan oder 4-Amino-3,3-dimethylbutyl-triethoxysilan.

Als Lactone geeignet sind insbesondere γ-Valerolacton, γ-Octalacton, δ-Decalacton, und ε-Decalacton, insbesondere γ-Valerolacton.

Als cyclische Carbonate eignen sich insbesondere 4,5-Dimethyl-1,3-dioxolan-2-on, 4,4-Dimethyl-1,3-dioxolan-2-on, 4-Ethyl-1,3-dioxolan-2-on, 4-Methyl-1,3-dioxolan-2-on oder 4-(Phenoxymethyl)-1 ,3-dioxolan-2-on.

Als Lactide eignen sich insbesondere 1,4-Dioxan-2,5-dion (Lactid aus 2-Hydroxyessigsäure, auch "Glycolid" genannt), 3,6-Dimethyl-1,4-dioxan-2,5-dion (Lactid aus Milchsäure, auch "Lactid" genannt) und 3,6-Diphenyl-1,4-dioxan-2,5-dion (Lactid aus Mandelsäure).

Bevorzugte Hydroxysilane, welche auf diese Weise erhalten werden, sind N-(3-Triethoxysilylpropyl)-2-hydroxypropanamid, N-(3-Trimethoxysilylpropyl)-2-hydroxypropanamid, N-(3-Triethoxysilylpropyl)-4-hydroxypentanamid, N-(3-Triethoxysilylpropyl)-4-hydroxyoctanamid, N-(3-Triethoxysilylpropyl)-5-hydroxy-decanamid oder N-(3-Triethoxysilylpropyl)-2-hydroxypropylcarbamat. Weiterhin sind geeignete Hydroxysilane auch erhältlich aus der Addition von Aminosilanen an Epoxide oder aus der Addition von Aminen an Epoxysilane. Bevorzugte Hydroxysilane, welche auf diese Weise erhalten werden, sind 2-Morpholino-4(5)-(2-trimethoxysilylethyl)cyclohexan-1-ol, 2-Morpholino-4(5)-(2-triethoxysilylethyl)cyclohexan-1 -ol oder 1-Morpholino-3-(3-(triethoxysilyl)propoxy)propan-2-ol.

Als Silangruppen-haltige Polyether sind auch kommerziell erhältliche Produkte geeignet, insbesondere die Folgenden: MS Polymer™ (von Kaneka Corp.; insbesondere die Typen S203H, S303H, S227, S810, MA903 und S943); MS Polymer™ bzw. Silyl™ (von Kaneka Corp.; insbesondere die Typen SAT010, SAT030, SAT200, SAX350, SAX400, SAX725, MAX450, MAX951); Excestar® (von Asahi Glass Co. Ltd.; insbesondere die Typen S2410, S2420, S3430, S3630); SPUR+* (von Momentive Performance Materials; insbesondere die Typen 1010LM, 1015LM, 1050MM); Vorasil™ (von Dow Chemical Co.; insbesondere die Typen 602 und 604); Desmoseal® (von Bayer MaterialScience AG; insbesondere die Typen S XP 2458, S XP 2636, S XP 2749, S XP 2774 und S XP 2821), TEGOPAC® (von Evonik Industries AG; insbesondere die Typen Seal 100, Bond 150, Bond 250), Polymer ST (von Hanse Chemie AG/Evonik Industries AG, insbesondere die Typen 47, 48, 61, 61LV, 77, 80, 81); Geniosil® STP (von Wacker Chemie AG; insbesondere die Typen E10, E15, E30, E35).

Besonders bevorzugte Endgruppen der Formel (XVII) sind Endgruppen der Formel (XVIII), 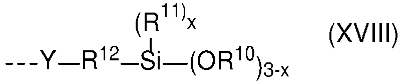 wobei
R¹² für einen linearen oder verzweigten, zweiwertigen Kohlenwasserstoff-Rest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht;
Y für einen zweiwertigen Rest ausgewählt aus -O-, -S-, -N(R¹³)-, -O-CO-N(R¹³)-, -N(R¹³)-CO-O- und -N(R¹³)-CO-N(R¹³)- steht,
   wobei R¹³ für einen Wasserstoff-Rest oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilyl-, Ether- oder Carbonsäureestergruppe aufweist, steht; und
R¹⁰, R¹¹ und x die bereits genannten Bedeutungen aufweisen.
Bevorzugt steht R¹² für 1,3-Propylen oder für 1,4-Butylen, wobei Butylen mit einer oder zwei Methylgruppen substituiert sein kann. Besonders bevorzugt steht R¹² für 1,3-Propylen.

Bevorzugt ist der erfindungsgemässe Katalysator in einer Silangruppen-haltigen Zusammensetzung in einer solchen Menge vorhanden, dass das Gewichtsverhältnis zwischen dem Silangruppen-haltigen Polymer und dem Katalysator mindestens 10/1, bevorzugt mindestens 20/1, beträgt.
Weiterhin bevorzugt ist der erfindungsgemässe Katalysator in einer Silangruppen-haltigen Zusammensetzung in einer solchen Menge vorhanden, dass das Gewichtsverhältnis zwischen dem Silangruppen-haltigen Polymer und dem Katalysator höchstens 5'000/1, bevorzugt höchstens 2'000/1, insbesondere höchstens 1 '000/1, beträgt.
Bevorzugt liegt das Gewichtsverhältnis zwischen dem Silangruppen-haltigen Polymer und dem erfindungsgemässen Katalysator im Bereich von 10/1 bis 2'000/1, insbesondere 10/1 bis 1'000/1.
Eine solche Zusammensetzung weist eine gute Lagerfähigkeit und eine schnelle Aushärtung auf.

Zusätzlich zum erfindungsgemässen Katalysator kann die härtbare Zusammensetzung weitere Katalysatoren, insbesondere für die Vernetzung von Silangruppen, enthalten. Als weitere Katalysatoren geeignet sind insbesondere Metall-Katalysatoren und/oder basische Stickstoff- oder Phosphorverbindungen.
Mögliche Metall-Katalysatoren sind insbesondere Verbindungen von Zinn, Titan, Zirkonium, Aluminium oder Zink, insbesondere Diorganozinn(IV)-Verbindungen wie insbesondere Dibutylzinn(IV)-diacetat, Dibutylzinn(IV)-dilaurat, Dibutylzinn(IV)-dineodecanoat oder Dibutylzinn(IV)-bis(acetylacetonat) und Dioctylzinn(IV)-dilaurat, sowie Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden.

Mögliche basische Stickstoff- oder Phosphorverbindungen sind insbesondere Imidazole, Pyridine, Phosphazen-Basen oder bevorzugt Amine, Hexahydrotriazine oder Biguanide sowie Amidine oder Guanidine, welche nicht dem erfindungsgemässen Katalysator entsprechen.
Geeignete Amine sind insbesondere Alkyl-, Cycloalkyl- oder Aralkylamine wie Triethylamin, Triisopropylamin, 1-Butylamin, 2-Butylamin, tert.Butylamin, 3-Methyl-1-butylamin, 3-Methyl-2-butylamin, Dibutylamin, Tributylamin, Hexylamin, Dihexylamin, Cyclohexylamin, Dicyclohexylamin, Dimethylcyclohexylamin, Benzylamin, Dibenzylamin, Dimethylbenzylamin, Octylamin, 2-Ethylhexylamin, Di-(2-ethylhexyl)amin, Laurylamin, N,N-Dimethyl-Iaurylamin, Stearylamin, N,N-Dimethyl-stearylamin; von natürlichen Fettsäuregemischen abgeleitete Fettamine, wie insbesondere Cocoalkylamin, N,N-Dimethyl-cocoalkylamin, C₁₆₋₂₂-Alkylamin, N,N-Dimethyl-C₁₆₋₂₂-alkylamin, Soyaalkylamin, N,N-Dimethyl-soyaalkylamin, Oleylamin, N,N-Dimethyl-oleylamin, Talgalkylamin oder N,N-Dimethyl-talgalkylamin, erhältlich beispielsweise unter den Handelsnamen Armeen® (von Akzo Nobel) oder Rofamin® (von Ecogreen Oleochemicals); aliphatische, cycloaliphatische oder araliphatische Diamine wie Ethylendiamin, Butandiamin, Hexamethylendiamin, Dodecandiamin, Neopentandiamin, 2-Methyl-pentamethylendiamin (MPMD), 2,2(4),4-Trimethylhexamethylendiamin (TMD), Isophorondiamin (IPD), 2,5(2,6)-Bis-(aminomethyl)-bicyclo[2.2.1]heptan (NBDA), 1,3-Xylylendiamin (MXDA), N,N'-Di(tert.butyl)ethylendiamin, N,N,N',N'-Tetramethyl-ethylendiamin, N,N,N',N'-Tetramethyl-propylendiamin, N,N,N',N'-Tetramethyl-hexamethylendiamin, 3-Dimethylaminopropylamin, 3-(Methylamino)propylamin, 3-(Cyclohexylamino)propylamin, Piperazin, N-Methylpiperazin, N,N'-Dimethylpiperazin, 1,4-Diazabicyclo[2.2.2]octan, Fettpolyamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Al-kyl)-1,3-propandiamin, erhältlich beispielsweise unter dem Handelsnamen Duomeen® (von Akzo Nobel); Polyalkylenamine wie Diethylentriamin, Dipropylentriamin, Triethylentetramin (TETA), Tetraethylenpentamin (TEPA), Pentamethylenhexamin (PEHA), 3-(2-Aminoethyl)aminopropylamin, N,N'-Bis(3-aminopropyl)ethylendiamin, N-(3-Aminopropyl)-N-methylpropandiamin, Bis(3-dimethylaminopropyl)amin, N-(3-Dimethylaminopropyl)-1,3-propylendiamin, N-(2-Aminoethyl)piperazin (N-AEP), N-(2-Aminopropyl)piperazin, N,N'-Di-(2-aminoethyl)piperazin, 1-Methyl-4-(2-dimethylaminoethyl)piperazin, N,N,N',N",N"-Pentamethyldiethylentriamin, N,N,N',N",N"-Pentamethyldipropylentriamin, Polyethylenimine, erhältlich beispielsweise unter den Handelsnamen Lupasol® (von BASF) und Epomin® (von Nippon Shokubai); Etheramine, wie insbesondere 2-Methoxyethylamin, 2-Ethoxyethylamin, 3-Methoxypropylamin, 3-Ethoxypropylamin, 3-(2-Ethylhexyloxy)propylamin, 3-(2-Methoxyethoxy)propylamin, 2(4)-Methoxyphenylethylamin, Morpholin, N-Methylmorpholin, N-Ethylmorpholin, 2-Aminoethylmorpholin, Bis(2-aminoethyl)ether, Bis(dimethylaminoethyl)-ether, Bis(dimorpholinoethyl)ether, N,N,N'-Trimethyl-N'-hydroxyethylbis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder 2-Aminopropyl-terminierte Glykole, wie sie beispielsweise unter dem Handelsnamen Jeffamin® (von Huntsman) erhältlich sind; Aminoalkohole, wie insbesondere Ethanolamin, Isopropanolamin, Diethanolamin, Diisopopanolamin, Triethanolamin, Triisopropanolamin, N-Butylethanolamin, Diglykolamin, N,N-Diethylethanolamin, N-Methyldiethanolamin, N-Methyldiisopropylamin, N,N,N'-Trimethylaminoethyl-ethanolamin, N-(3-Dimethylaminopropyl)-N,N-diisopropanolamin, N,N-Bis(3-dimethylaminopropyl)-N-isopropanolamin, 2-(2-Dimethylaminoethoxy)ethanolamin oder Addukte aus Mono- und Polyaminen mit Epoxiden oder Diepoxiden; Phenolgruppen-haltige Amine, wie insbesondere Kondensationsprodukte aus Phenolen, Aldehyden und Aminen (sogenannte Mannich-Basen und Phenalkamine) wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin sowie im Handel unter den Markennamen Cardolite® (von Cardolite), Aradur® (von Huntsman) und Beckopox® (von Cytec) erhältliche Phenalkamine; Amidgruppen-haltige Polyamine, sogenannte Polyamidoamine, wie sie im Handel erhältlich sind, beispielsweise unter den Markennamen Versamid® (von Cognis), Aradur® (von Huntsman), Euretek® (von Huntsman) oder Beckopox® (von Cytec); oder Aminosilane, wie insbesondere 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropylmethyldimethoxysilan, N-(2-Aminoethyl)-N'-[3-(trimethoxysilyl)propyl]ethylendiamin oder deren Analoga mit Ethoxy- anstelle der Methoxygruppen am Silicium.

Geeignete Triazine sind insbesondere 1,3,5-Hexahydrotriazin oder 1,3,5-Tris(3-(dimethylamino)propyl)-hexahydrotriazin.
Geeignete Biguanide sind insbesondere Biguanid, 1-Butylbiguanid, 1,1-Dimethylbiguanid, 1-Butylbiguanid, 1-Phenylbiguanid oder 1-(o-Tolyl)biguanid (OTBG).
Geeignete Amidine, welche nicht dem erfindungsgemässen Katalysator entsprechen, sind insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, 6-Dibutylamino-1,8-diazabicyclo[5.4.0]undec-7-en, N,N'-Di-n-hexylacetamidin (DHA), 2-Methyl-1,4,5,6-tetrahydropyrimidin, 1,2-Dimethyl-1,4,5,6-tetrahydropyrimidin, 2,5,5-Trimethyl-1,4,5,6-tetrahydropyrimidin, N-(3-Trimethoxysilylpropyl)-4,5-dihydroimidazol oder N-(3-Triethoxysilylpropyl)-4,5-dihydroimidazol.
Geeignete Guanidine, welche nicht dem erfindungsgemässen Katalysator entsprechen, sind insbesondere 1-Butylguanidin, 1,1-Dimethylguanidin, 1,3-Dimethylguanidin, 1,1,3,3-Tetramethylguanidin (TMG), 2-(3-(Trimethoxysilyl)-propyl)-1,1,3,3-tetramethylguanidin, 2-(3-(Methyldimethoxysilyl)propyl)-1,1,3,3-tetramethylguanidin, 2-(3-(Triethoxysilyl)propyl)-1,1,3,3-tetramethylguanidin, 1,5,7-Triazabicyclo[4.4.0]dec-5-en (TBD), 7-Methyl-1,5,7-triazabicyclo[4.4.0]-dec-5-en, 7-Cyclohexyl-1,5,7-triazabicyclo[4.4.0]dec-5-en, 1-Phenylguanidin, 1-(o-Tolyl)guanidin (OTG), 1,3-Diphenylguanidin, 1,3-Di(o-tolyl)guanidin oder 2-Guanidinobenzimidazol.
Weiterhin kann die härtbare Zusammensetzung als Co-Katalysator eine Säure enthalten, insbesondere eine Carbonsäure. Bevorzugt sind aliphatische Carbonsäuren wie Ameisensäure, Laurinsäure, Stearinsäure, Isostearinsäure, Ölsäure, 2-Ethyl-2,5-dimethylcapronsäure, 2-Ethylhexansäure, Neodecansäure, Fettsäuregemische aus der Verseifung von natürlichen Fetten und Ölen oder Di- und Polycarbonsäuren, insbesondere Poly(meth)acrylsäuren.

Die härtbare Zusammensetzung ist in einer bevorzugten Ausführungsform im Wesentlichen frei von Organozinn-Verbindungen. Organozinn-freie Zusammensetzungen sind hinsichtlich Gesundheitsschutz und Umweltschutz vorteilhaft. Insbesondere beträgt der Zinngehalt der härtbaren Zusammensetzung weniger als 0.1 Gew.-%, insbesondere weniger als 0.05 Gew.-%.

In einer Ausführungsform der Erfindung enthält die härtbare Zusammensetzung neben dem erfindungsgemässen Katalysator zusätzlich mindestens ein Organotitanat. Eine Kombination aus erfindungsgemässem Katalysator und Organotitanat weist eine besonders hohe katalytische Aktivität auf. Dadurch wird eine schnelle Aushärtung einer solchen Zusammensetzung bei verhältnismässig geringer Einsatzmenge des Katalysators ermöglicht.
Als Organotitanat geeignet sind insbesondere Titan(IV)-Komplexverbindungen. Bevorzugte Organotitanate sind insbesondere ausgewählt aus
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierten Organotitanaten, insbesondere oligomerem Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.
Ganz besonders geeignete Organotitanate sind ausgewählt aus Bis(ethylacetoacetato)diisobutoxy-titan(IV) (kommerziell erhältlich beispielsweise als Tyzor® IBAY von Dorf Ketal), Bis(ethylacetoacetato)diisopropoxy-titan(IV) (kommerziell erhältlich beispielsweise als Tyzor® DC von Dorf Ketal), Bis(acetylacetonato)diisopropoxy-titan(IV), Bis(acetylacetonato)diisobutoxy-titan(IV), Tris(oxyethyl)-amin-isopropoxy-titan(IV), Bis[tris(oxyethyl)amin]diisopropoxy-titan(IV), Bis(2-ethylhexan-1,3-dioxy)-titan(IV), Tris[2-((2-Aminoethyl)amino)ethoxy]ethoxy-titan(IV), Bis(neopentyl(diallyl)oxy)-diethoxy-titan(IV), Titan(IV)-tetrabutanolat, Tetra(2-ethylhexyloxy)titanat, Tetra(isopropoxy)titanat und Polybutyltitanat. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).

In einer Organotitanat-haltigen Zusammensetzung liegt das Gewichtsverhältnis zwischen einem Silangruppen-haltigen Polymer und dem erfindungsgemässen Katalysator bevorzugt im Bereich von 10/1 bis 2'000/1, insbesondere 20/1 bis 2'000/1.
Das Gewichtsverhältnis zwischen dem Organotitanat und dem erfindungsgemässen Katalysator liegt bevorzugt im Bereich von 5/1 bis 1/50, besonders bevorzugt 2/1 bis 1/20, insbesondere 1/1 bis 1/10.

Die härtbare Zusammensetzung kann zusätzlich zum erfindungsgemässen Katalysator weitere Bestandteile enthalten, insbesondere die folgenden Hilfs- und Zusatzmittel:
- Haftvermittler und/oder Vernetzer, insbesondere Aminosilane wie insbesondere 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropyldimethoxymethylsilan, N-(2-Aminoethyl)-N'-[3-(trimethoxysilyl)propyl]ethylendiamin oder deren Analoga mit Ethoxy- anstelle von Methoxygruppen, weiterhin N-Phenyl-, N-Cyclohexyl- oder N-Alkylaminosilane, Mercaptosilane, Epoxysilane, (Meth)acrylosilane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen, aminofunktionelle Alkylsilsesquioxane, insbesondere aminofunktionelles Methylsilsesquioxan oder aminofunktionelles Propylsilsesquioxan. Insbesondere geeignet sind 3-Aminopropyltrimethoxysilan, 3-Aminopropyltriethoxysilan, N-(2-Aminoethyl)-3-aminopropyltrimethoxysilan, N-(2-Aminoethyl)-3-aminopropyltriethoxysilan, 3-Glycidoxypropyltrimethoxysilan, 3-Glycidoxypropyltriethoxysilan oder 3-Ureidopropyltrimethoxysilan, oder oligomere Formen dieser Silane;
- Trocknungsmittel, insbesondere Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methylcarbamat, (Methacryloxymethyl)silane, Methoxymethylsilane, Orthoameisensäureester, Calciumoxid oder Molekularsiebe, insbesondere Vinyltrimethoxysilan oder Vinyltriethoxysilan;
- Weichmacher, insbesondere trialkylsilylterminierte Polydialkylsiloxane wie insbesondere trimethylsilylterminierte Polydimethylsiloxane, insbesondere mit Viskositäten im Bereich von 10 bis 1'000 mPa·s, oder entsprechende Verbindungen, bei denen einige der Methylgruppen ersetzt sind durch andere organische Gruppen, insbesondere Phenyl-, Vinyl- oder Trifluorpropylgruppen, sogenannte Reaktivweichmacher in Form von monofunktionellen, also einseitig reaktiven, Polysiloxanen, Carbonsäureester wie Phthalate, insbesondere Dioctylphthalat, Bis(2-ethylhexyl)phthalat, Bis(3-propylheptyl)phthalat, Diisononylphthalat oder Diisodecylphthalat, Diester von ortho-Cyclohexandicarbonsäure, insbesondere Diisononyl-1,2-cyclohexandicarboxylat, Adipate, insbesondere Dioctyladipat, Bis(2-Ethylhexyl)adipat, Azelate, insbesondere Bis(2-ethylhexyl)acelat, Sebacate, insbesondere Bis(2-ethylhexyl)sebacat oder Diisononylsebacat, Polyole, insbesondere Polyoxyalkylenpolyole oder Polyesterpolyole, Glykolether, Glykolester, organische Phosphor- oder Sulfonsäureester, Sulfonsäureamide, Polybutene oder von natürlichen Fetten oder Ölen abgeleitete Fettsäuremethyl- oder -ethylester, auch "Biodiesel" genannt, wobei Siloxan-haltige Weichmacher besonders geeignet sind für Zusammensetzungen auf Basis von Silicon-Polymeren;
- Lösemittel;
- anorganische oder organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene;
- Stabilisatoren gegen Oxidation, Wärme, Licht oder UV-Strahlung;
- natürliche Harze, Fette oder Öle wie Kolophonium, Schellack, Leinöl, Rizinusöl oder Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid und Magnesiumhydroxid, oder insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinolbis(diphenylphosphat), Bisphenol-A-bis(diphenylphosphat) oder Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in härtbaren Zusammensetzungen eingesetzte Substanzen. Es kann sinnvoll sein, gewisse Bestandteile vor dem Einmischen in die Zusammensetzung chemisch oder physikalisch zu trocknen.

In einer bevorzugten Ausführungsform enthält die härtbare Zusammensetzung mindestens ein Trocknungsmittel und mindestens einen Haftvermittler und/oder Vernetzer.
In einer bevorzugten Ausführungsform enthält die härtbare Zusammensetzung keine Phthalate als Weichmacher. Solche Zusammensetzungen sind toxikologisch vorteilhaft und weisen weniger Probleme mit Migrationseffekten auf.

Die härtbare Zusammensetzung wird vorzugsweise unter Ausschluss von Feuchtigkeit hergestellt und aufbewahrt. Typischerweise ist sie in einer geeigneten Verpackung oder Anordnung, wie insbesondere einer Flasche, einer Büchse, einem Beutel, einem Eimer, einem Fass oder einer Kartusche, unter Ausschluss von Feuchtigkeit lagerstabil.
Die härtbare Zusammensetzung kann in Form einer einkomponentigen oder in Form einer mehrkomponentigen, insbesondere zweikomponentigen, Zusammensetzung vorliegen.
Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.
Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, gegebenenfalls unter Einwirkung von Feuchtigkeit.

Die härtbare Zusammensetzung eignet sich für eine Vielzahl von Verwendungen, insbesondere als Anstrich, Lack oder Primer, als Harz zur Herstellung von Faserverbundwerkstoff (Composite), als Hartschaum, Weichschaum, Formteil, Elastomer, Faser, Folie oder Membran, als Vergussmasse, Dichtstoff, Klebstoff, Belag, Beschichtung oder Anstrich für Bau- und Industrieanwendungen, beispielsweise als Nahtabdichtung, Hohlraumversiegelung, Elektroisolationsmasse, Spachtelmasse, Fugendichtstoff, Schweiss- oder Bördelnahtdichtstoff, Montageklebstoff, Karrosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag, Bodenbeschichtung, Balkonbeschichtung, Dachbeschichtung, Betonschutzbeschichtung, Parkhausbeschichtung, Versiegelung, Rohrbeschichtung, Korrosionsschutzbeschichtung, Textilbeschichtung, Dämpfungselement, Dichtungselement oder Spachtelmasse.
Besonders geeignet ist die härtbare Zusammensetzung als Klebstoff und/oder Dichtstoff, insbesondere für die Fugenabdichtung und für elastische Klebeverbindungen in Bau- und Industrieanwendungen, sowie als elastische Beschichtung mit rissüberbrückenden Eigenschaften, insbesondere zum Schützen und/oder Abdichten von beispielsweise Dächern, Böden, Balkonen, Parkdecks oder Betonröhren.
Eine solche Zusammensetzung enthält typischerweise Weichmacher, Füllstoffe, Haftvermittler und/oder Vernetzer und Trocknungsmittel und gegebenenfalls weitere Hilfs- und Zusatzstoffe.
Für eine Anwendung als Klebstoff oder Dichtstoff weist die härtbare Zusammensetzung bevorzugt eine pastöse Konsistenz mit strukturviskosen Eigenschaften auf. Ein solcher pastöser Dichtstoff oder Klebstoff wird insbesondere aus handelsüblichen Kartuschen, welche manuell, mittels Druckluft oder Batterie betrieben werden, oder aus einem Fass oder Hobbock mittels einer Förderpumpe oder eines Extruders, gegebenenfalls mittels eines Applikationsroboters, auf ein Substrat aufgetragen.
Für eine Anwendung als Beschichtung weist die härtbare Zusammensetzung bevorzugt eine bei Raumtemperatur flüssige Konsistenz mit selbstverlaufenden Eigenschaften auf. Gegebenenfalls ist sie leicht thixotrop, so dass die Beschichtung an abschüssigen bis senkrechten Flächen applizierbar ist, ohne sofort wegzufliessen. Sie wird insbesondere appliziert mittels Rolle oder Pinsel oder durch Ausgiessen und Verteilen mittels beispielsweise einem Roller, einem Schaber oder einer Zahntraufel.

Aus der beschriebenen härtbaren Zusammensetzung wird nach deren Aushärtung eine ausgehärtete Zusammensetzung erhalten. Die Aushärtung erfolgt insbesondere mit Wasser, insbesondere in Form von Luftfeuchtigkeit, und/oder mit einem geeigneten Vernetzer.

Aus der Verwendung der härtbaren Zusammensetzung entsteht ein Artikel, welcher mit der Zusammensetzung insbesondere verklebt, abgedichtet oder beschichtet wurde. Beim Artikel handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter; oder der Artikel kann ein Anbauteil davon sein.

Eine bevorzugte härtbare Zusammensetzung enthält mindestens ein Silangruppen-haltiges Polymer. Eine solche Zusammensetzung wird im Folgenden auch als "silanvernetzende Zusammensetzung" bezeichnet.
Üblicherweise beträgt der Anteil an Silangruppen-haltigem Polymer in einer silanvernetzenden Zusammensetzung 10 bis 80 Gew.-%, insbesondere 15 bis 60 Gew.-%, bevorzugt 15 bis 50 Gew.-%, bezogen auf das Gesamtgewicht der Zusammensetzung.
Für den Fall, dass die silanvernetzende Zusammensetzung ein reaktives Silicon-Polymer enthält, ist sowohl eine einkomponentige Zusammensetzung, auch als RTV-1 bezeichnet, als auch eine zweikomponentige Zusammensetzung, auch als RTV-2 bezeichnet, bevorzugt. Im Fall einer RTV-2 Zusammensetzung ist das reaktive Silicon-Polymer bevorzugt ein Bestandteil der ersten Komponente und ein Silanvernetzer, insbesondere ein Silan der Formel (XVI), ist bevorzugt ein Bestandteil der zweiten Komponente. Der erfindungsgemässe Katalysator kann dabei in der ersten und/oder in der zweiten Komponente enthalten sein.
Für den Fall, dass die silanvernetzende Zusammensetzung ein Silangruppen-haltiges organisches Polymer enthält, ist die Zusammensetzung bevorzugt einkomponentig.
Eine zweite oder gegebenenfalls weitere Komponenten wird bzw. werden mit der ersten Komponente vor oder bei der Applikation vermischt, insbesondere über einen Statikmischer oder über einen dynamischen Mischer.
Eine silanvernetzende Zusammensetzung wird insbesondere umgebungswarm, bevorzugt in einem Temperaturbereich zwischen 0 und 45 °C, insbesondere 5 bis 35 °C, appliziert und härtet auch bei diesen Bedingungen aus. Bei der Applikation beginnt die Vernetzungsreaktion der Silangruppen, gegebenenfalls unter Einfluss von Feuchtigkeit. Vorhandene Silangruppen können mit vorhandenen Silanolgruppen zu Siloxangruppen (Si-O-Si-Gruppen) kondensieren. Vorhandene Silangruppen können bei Kontakt mit Feuchtigkeit auch zu Silanolgruppen (Si-OH-Gruppen) hydrolysieren und durch nachfolgende Kondensationsreaktionen Siloxangruppen (Si-O-Si-Gruppen) bilden. Als Ergebnis dieser Reaktionen härtet die Zusammensetzung schliesslich aus. Der erfindungsgemässe Katalysator beschleunigt diese Aushärtung.
Falls für die Aushärtung Wasser benötigt wird, kann dieses entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation Wasser oder eine Wasser enthaltende Komponente zugesetzt werden, zum Beispiel in Form einer wasserhaltigen oder Wasser freisetzenden Flüssigkeit oder Paste. Eine
Paste ist insbesondere geeignet für den Fall, dass die Zusammensetzung selber in Form einer Paste vorliegt.
Bei einer Aushärtung mittels Luftfeuchtigkeit härtet die Zusammensetzung von aussen nach innen durch, wobei zunächst eine Haut an der Oberfläche der Zusammensetzung gebildet wird. Die sogenannte Hautbildungszeit stellt ein Mass für die Aushärtungsgeschwindigkeit der Zusammensetzung dar. Die Geschwindigkeit der Aushärtung wird dabei im Allgemeinen von verschiedenen Faktoren, wie beispielsweise der Verfügbarkeit von Wasser, der Temperatur usw., bestimmt.
Die silanvernetzende Zusammensetzung verfügt typischerweise über eine gute Lagerfähigkeit ohne Separationsneigung, erlaubt aufgrund der geringen Toxizität und geringen Flüchtigkeit des erfindungsgemässen Katalysators eine niedrige Gefahreneinstufung und ermöglicht emissions- und geruchsarme Produkte, welche rasch aushärten und dabei ein mechanisch hochwertiges und beständiges Material bilden. Besonders vorteilhaft ist dabei der Umstand, dass dieses Material kaum zu migrationsbedingten Fehlern wie Ausschwitzen oder Substratverschmutzung neigt, im Gegensatz zu Zusammensetzungen enthaltend Katalysatoren nach dem Stand der Technik, wie beispielsweise DBU, TMG oder DHA. Zusammensetzungen enthaltend solche Katalysatoren neigen zu Migrationseffekten, was sich vor der Aushärtung durch Separation und nach der Aushärtung durch klebrige und/oder schmierige Oberflächen und/oder Substratverschmutzungen äussern kann. Besonders letztere Effekte sind äusserst unerwünscht, da klebrige und schmierige Oberflächen schnell verschmutzen und schlecht überstreichbar sind, und Substratverunreinigungen zu bleibenden Verfärbungen führen können.
Bei der Applikation wird eine silanvernetzende Zusammensetzung bevorzugt auf mindestens ein Substrat appliziert.
Geeignete Substrate sind insbesondere
- Glas, Glaskeramik, Beton, Mörtel, Backstein, Ziegel, Gips oder Natursteine wie Kalkstein, Granit oder Marmor;
- Metalle und Legierungen, wie Aluminium, Eisen, Stahl oder Buntmetalle, sowie oberflächenveredelte Metalle oder Legierungen, wie verzinkte oder verchromte Metalle;
- Leder, Textilien, Papier, Holz, mit Harzen, beispielsweise Phenol-, Melamin-oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) oder Ethylen/Propylen/Dien-Terpolymere (EPDM), oder faserverstärkte Kunststoffe wie Kohlefaserverstärkte Kunststoffe (CFK), Glasfaser-verstärkte Kunststoffe (GFK) oder Sheet Moulding Compounds (SMC), wobei die Kunststoffe bevorzugt mittels Plasma, Corona oder Flammen oberflächenbehandelt sein können;
- beschichtete Substrate, wie pulverbeschichtete Metalle oder Legierungen;
- Farben oder Lacke, insbesondere Automobildecklacke.
Die Substrate können bei Bedarf vor dem Applizieren der Zusammensetzung vorbehandelt werden, insbesondere durch physikalische und/oder chemische Reinigungsverfahren oder durch das Aufbringen eines Haftvermittlers, einer Haftvermittlerlösung oder eines Primers.
Besonders geeignet ist die silanvernetzende Zusammensetzung für den Kontakt mit Substraten, die besonders empfindlich sind auf Störungen durch migrierende Substanzen, insbesondere durch das Ausbilden von Verfärbungen oder Flecken. Dies sind insbesondere feinporige Substrate wie Marmor, Kalkstein oder andere Natursteine, Gips, Zementmörtel oder Beton, aber auch Kunststoffe. Insbesondere auf PVC werden bei der Anwesenheit von Katalysatoren wie beispielsweise DBU oder TMG starke Verfärbungen beobachtet, die sich durch Reinigung nicht entfernen lassen. Solche Effekte werden mit den erfindungsgemässen Katalysatoren nicht beobachtet.
Besonders geeignet ist die silanvernetzende Zusammensetzung als Klebstoff und/oder Dichtstoff oder als Beschichtung.
Verklebt oder abgedichtet werden können zwei gleichartige oder zwei verschiedene Substrate, insbesondere die vorgängig genannten Substrate.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet.

**¹H-NMR-Spektren** wurden auf einem Spektrometer des Typs Bruker Ascend 400 bei 400.14 MHz gemessen; die chemischen Verschiebungen δ sind angegeben in ppm relativ zu Tetramethylsilan (TMS). Echte und Pseudo-Kopplungsmuster wurden nicht unterschieden.

**Infrarotspektren** (FT-IR) wurden auf einem mit horizontaler ATR-Messeinheit mit Diamant-Kristall ausgestatteten FT-IR Gerät Nicolet iS5 von Thermo Scientific gemessen. Flüssige Proben wurden unverdünnt als Filme aufgetragen, feste Proben wurden in CH₂Cl₂ gelöst. Die Absorptionsbanden sind in Wellenzahlen (cm⁻¹) angegeben (Messfenster: 4000-650 cm⁻¹). **Viskositäten** wurden auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

Die **Hautbildungszeit** (HBZ) wurde dadurch bestimmt, dass einige Gramm der Zusammensetzung in einer Schichtdicke von ca. 2 mm auf Pappkarton aufgetragen wurden und im Normklima die Zeitdauer gemessen wurde, bis beim leichten Antippen der Oberfläche der Zusammensetzung mittels einer Pipette aus LDPE erstmals keine Rückstände auf der Pipette mehr zurückblieben.

Die Beschaffenheit der **Oberfläche** wurde haptisch geprüft.

Die mechanischen Eigenschaften **Zugfestigkeit, Bruchdehnung** und **E-Modul** (bei 0-5% und bei 0-50% Dehnung) wurden gemäss DIN EN 53504 bei einer Zuggeschwindigkeit von 200 mm/min. gemessen.

Die **Shore A-Härte** wurde bestimmt nach DIN 53505 an während 7 Tagen im Normklima ausgehärteten Prüfkörpern.

### Herstellung von erfindungsgemässen Katalysatoren:

**Katalysator K-1:** 1,1'-(α,ω-n-Propyl-poly(dimethylsiloxan))-bis(2,3-dicyclo-hexylguanidin)

In einem Rundkolben wurden 16.90 g α,ω-Bis(3-aminopropyl)-poly(dimethylsiloxan) mit einem mittleren Molekulargewicht von ca. 1050 g/mol (Wacker® Aminöl SLM 92503, von Wacker; Aminzahl 109 mg KOH/g) und 6.18 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 17 Stunden war die Carbodiimid-Bande bei ca. 2120 cm⁻¹ vollständig verschwunden. Man erhielt ein farbloses, geruchloses Öl mit einer Viskosität bei 20 °C von 436 mPa·s.

FT-IR: 2961, 2930, 2855, 1647 (C=N), 1449, 1411, 1364, 1258, 1011, 862, 788, 700.

**Katalysator K-2:** 1 -(α-Propyl-(ω-lsobutoxy-poly(dimethylsiloxan))-2,3-dicyclo-hexylguanidin
In einem Rundkolben wurden 30.44 g α-(3-Aminopropyl)-ω-isobutoxy-poly(dimethylsiloxan) mit einem mittleren Molekulargewicht von ca. 1650 g/mol (Wacker® Aminöl SLM 446011-20 VP, von Wacker; Aminzahl 34 mg KOH/g) und 3.50 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 17 Stunden war die Carbodiimid-Bande bei ca. 2120 cm⁻¹ vollständig verschwunden. Man erhielt ein gelbliches, geruchloses Öl mit einer Viskosität bei 20 °C von unter 10 mPa·s.
FT-IR: 2961, 2927, 2852, 1640 (C=N), 1517, 1449, 1410, 1258, 1190, 1074, 1012, 848, 791, 700.

### Katalysator K-3:

In einem Rundkolben wurden 20.0 g vernetzbares aminofunktionelles Poly(dimethylsiloxan) (WACKER® L 655 Siliconöl, von Wacker; Aminzahl 78 mg KOH/g) und 5.25 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 28 Stunden war die Carbodiimid-Bande bei ca. 2120 cm⁻¹ vollständig verschwunden. Man erhielt ein gelbliches, geruchloses Öl mit einer Viskosität bei 20 °C von 544 mPa·s.
FT-IR: 2961, 2927, 2852, 1640 (C=N), 1517, 1449, 1410, 1258, 1190, 1074, 1012, 848, 791, 700.

### Katalysator K-4:

In einem Rundkolben wurden 20.0 g nichtvernetzbares aminofunktionelles Poly(dimethylsiloxan) (WACKER® L 656 Siliconöl, von Wacker; Aminzahl 73 mg KOH/g) und 4.88 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 72 Stunden war die Carbodiimid-Bande bei ca. 2120 cm⁻¹ vollständig verschwunden. Man erhielt ein gelbliches, geruchloses Öl mit einer Viskosität bei 20 °C von 285 mPa·s.
FT-IR: 2962, 2928, 2853, 1644 (C=N), 1449, 1397, 1258, 1074, 1012, 851, 791, 701.

### Katalysator K-5:

In einem Rundkolben wurden 20.0 g nichtvernetzbares aminofunktionelles Poly(dimethylsiloxan) (WACKER® FINISH WT 1650 Siliconöl, von Wacker; Aminzahl 34 mg KOH/g) und 2.25 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 72 Stunden war die Carbodiimid-Bande bei ca. 2120 cm⁻¹ vollständig verschwunden. Man erhielt ein gelbliches, geruchloses Öl mit einer Viskosität bei 20 °C von 773 mPa·s.
FT-IR: 2962, 2930, 2855, 1617 (C=N), 1449, 1412, 1258, 1074, 1009, 863, 792, 700.

### Katalysator K-6:

In einem Rundkolben wurden 11.52 g N-(2-Aminoethyl)-3-aminopropyl-funktionelles Polysiloxan (Dynasylan® 1146, von Evonik; Aminzahl 243 mg KOH/g) und 5.16 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 70 Stunden war die Carbodiimid-Bande bei ca. 2120 cm⁻¹ vollständig verschwunden. Darauf wurden 0.17 g Vinyltrimethoxysilan zugegeben. Man erhielt ein farbloses, geruchloses Öl mit einer Viskosität bei 25 °C von 224'000 mPa·s.
¹H-NMR (CDCl₃): δ 0.5-0.7 (*m*, 2 H, CH₂Si), 1.1-1.4 (*m*, 12 H), 1.55-2.0 (*m*, 10 H), 2.60 (*m*, 2 H, CH₂N), 2.73 (*m*, 2 H, CH₂N), 3.0-3.1 (*m*, 1 H, NCH^{Cy}), 3.10 (*m*, 2 H, CH₂N), 3.15-3.27 (*m*, 1 H, NCH^{Cy}), 3.47-3.60 (*m*, ca. 6 H, CH₃O).
FT-IR: 3269, 2952, 2868, 2840, 1639 (C=N), 1498, 1449, 1409, 1359, 1216, 1191, 1050, 889, 817, 779, 690.

**Katalysator K-7:** N,N"-(α,ω-Bis(n-propyl)-poly(dimethylsiloxan))bis(N'-hexyl-acetimidamid)
In einem Rundkolben wurden 20.00 g α,ω-Bis(3-aminopropyl)-poly(dimethyl-siloxan) mit einem mittleren Molekulargewicht von ca. 1050 g/mol (Wacker® Aminöl SLM 92503, von Wacker; Aminzahl 109 mg KOH/g), 3.82 g n-Hexylamin, 4.99 g Trimethylorthoacetat und 0.20 g Lanthan(III)-trifluormethansulfonat vermischt und in einem Mikrowellengerät bei einem Maximaldruck von 150 Pa unter Rühren während 40 Minuten auf 180 °C erwärmt. Darauf wurde das Reaktionsgemisch im Vakuum von den flüchtigen Bestandteilen befreit. Man erhielt 25.11 g eines farblosen, geruchlosen Öls.
FT-IR: 3292, 2960, 2930, 2860, 1653, 1555, 1440, 1412, 1367, 1257, 1188, 1018, 840, 791, 702.

### Herstellung von Silangruppen-haltigen Polymeren:

### Polymer STP-1:

Unter Feuchtigkeitsausschluss wurden 1000 g Polyol Acclaim® 12200 (Polyoxypropylendiol mit niedrigem Ungesättigtheitsgrad, von Bayer; OH-Zahl 11.0 mg KOH/g), 43.6 g Isophorondiisocyanat (IPDI; Vestanat® IPDI, von Evonik), 126.4 g Diisodecylphthalat (DIDP) und 0.1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0.63 Gew.-% erreicht hatte. Anschliessend wurden 63.0 g N-(3-Trimethoxysilylpropyl)-amino-bernsteinsäurediethylester (Addukt aus 3-Aminopropyltrimethoxysilan und Maleinsäurediethylester; hergestellt nach den Angaben in US 5,364,955) eingemischt und die Mischung bei 90 °C solange gerührt, bis mittels FT-IR-Spektroskopie kein freies Isocyanat mehr nachgewiesen wurde. Der so erhaltene Trimethoxysilangruppen-haltige Polyether mit einem Silan-Equivalentgewicht von ca. 6880 g/Eq (aus den Einsatzmengen berechnet) wurde auf Raumtemperatur abgekühlt und unter Ausschluss von Feuchtigkeit aufbewahrt.

### Polymer STP-2:

Unter Feuchtigkeitsausschluss wurden 1000 g Polyol Acclaim® 12200 (Polyoxypropylendiol mit niedrigem Ungesättigtheitsgrad, von Bayer; OH-Zahl 11.0 mg KOH/g), 43.6 g Isophorondiisocyanat (IPDI; Vestanat® IPDI, von Evonik), 126.4 g Diisodecylphthalat (DIDP) und 0.1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0.64 Gew.-% erreicht hatte. Anschliessend wurden 70.6 g N-(3-Triethoxysilylpropyl)-amino-bernsteinsäurediethylester (Addukt aus 3-Aminopropyltriethoxysilan und Maleinsäurediethylester) eingemischt und die Mischung bei 90 °C solange gerührt, bis mittels FT-IR-Spektroskopie kein freies Isocyanat mehr nachgewiesen wurde. Der so erhaltene Triethoxysilangruppen-haltige Polyether mit einem Silan-Equivalentgewicht von ca. 6920 g/Eq (aus den Einsatzmengen berechnet) wurde auf Raumtemperatur abgekühlt und unter Ausschluss von Feuchtigkeit aufbewahrt.

### Herstellung von Silanvernetzenden Zusammensetzungen:

Die Zusammensetzungen Z1 bis Z20 sind erfindungsgemässe Beispiele, die Zusammensetzungen V1 bis V12 sind Vergleichsbeispiele.

### Verwendete kommerzielle Katalysatoren und Abkürzungen dafür:

- DBU: 1,8-Diazabicyclo[5.4.0]undec-7-en
- TMG: 1,1,3,3-Tetramethylguanidin
- IBAY: Bis(ethylacetoacetato)diisobutoxy-titan(IV) (Tyzor® IBAY, von Dorf Ketal)

### Zusammensetzungen Z1 bis Z8 und Vergleiche V1 bis V3:

Eine Zusammensetzung aus 96.5 g Polymer STP-1, 0.5 g Vinyltrimethoxysilan und 3.0 g 3-Aminopropyltrimethoxysilan wurde mit verschiedenen Katalysatoren in der angegebenen Menge gemäss Tabelle 1 vermengt und die Mischung auf Viskosität und Hautbildungszeit (HBZ) im Normklima, vor und nach Lagerung, geprüft. Die Hautbildungszeit dient dabei als Mass für die Aktivität des Katalysators in Bezug auf die Vernetzungsreaktion der Silangruppen, d.h. für die Vernetzungsgeschwindigkeit; die Veränderung der Viskosität und der Hautbildungszeit nach Lagerung sind ein Mass für die Lagerstabilität. Weiterhin wurde die applizierte Mischung nach 24 Stunden im Normklima daraufhin geprüft, ob die Oberfläche wie gewünscht trocken war oder sich ein schmieriger Film gebildet hatte, was ein Anzeichen für das Ausschwitzen des Katalysators aufgrund schlechter Verträglichkeit mit dem ausgehärteten Kunststoff ist, und/oder ob die Oberfläche klebrig war, was ein Anzeichen für eine unvollständige Aushärtung ist. Weiterhin wurde von der Mischung ein Film von 2 mm Dicke hergestellt, während 7 Tagen im Normklima aushärten lassen und auf mechanische Eigenschaften geprüft. Die Ergebnisse sind in Tabelle 1 und 2 wiedergegeben. "Zus." steht für "Zusammensetzung".

**Tabelle 1:**

| **Zus.** | **Katalysator** | **Menge** | **Konzentration ¹** | **Viskosität [Pa·s]** | | | **HBZ** | |
|---|---|---|---|---|---|---|---|---|
| | | | | **frisch** | **gelagert²** | **Zunahme** | **frisch** | **gelagert²** |
| V1 | DBU | 0.28 g | 1.9 | 27.2 | 36.9 | 36% | 25' | 29' |
| V2 | DBU | 0.04 g | 0.25 | 26.9 | 28.9 | 7% | 54' | 90' |
| | IBAY | 0.25 g | 0.5 | | | | | |
| V3 | TMG | 0.21 g | 1.9 | 22.3 | 24.6 | 10% | 65' | 75' |
| Z1 | K-1 | 1.41 g | 1.9 | 23.4 | 26.4 | 13% | 15' | 17' |
| Z2 | K-1 | 0.18 g | 0.25 | 27.2 | 32.1 | 18% | 48' | 54' |
| | IBAY | 0.25 g | 0.5 | | | | | |
| Z3 | K-3 | 1.82 g | 1.9 | 29.9 | 37.4 | 25% | 20' | 28' |
| Z4 | K-4 | 1.93 g | 1.9 | 28.1 | 36.6 | 30% | 27' | 26' |
| Z5 | K-5 | 3.74 g | 1.9 | 27.1 | 27.3 | 1% | 61' | 64' |
| Z6 | K-6 | 1.24 g | 1.9 | 33.2 | 41.3 | 25% | 13' | 26' |
| Z7 | K-6 | 0.17 g | 0.25 | 28.1 | 31.0 | 10% | 70' | 90' |
| | IBAY | 0.25 g | 0.5 | | | | | |
| Z8 | K-7 | 1.20 g | 1.9 | 28.8 | 30.3 | 5% | 62' | 65' |

| | | | | | | | | |
|---|---|---|---|---|---|---|---|---|
| ¹ mmol Amidin- oder Guanidin-Gruppen oder Metallatome auf 100 g Silangruppen-haltiges Polymer. ² während 7 Tagen bei 60 °C in geschlossenem Gebinde. | | | | | | | | |

**Tabelle 2:**

| **Zus.** | **Oberfläche nach 24h** | **Zugfestigkeit** | **Bruchdehnung** | **E-Modul** | |
|---|---|---|---|---|---|
| | | | | **0-5%** | **0-50%** |
| **V1** | schmierig | 0.58 MPa | 72% | 1.16 MPa | 0.77 MPa |
| **V2** | trocken | 0.66 MPa | 91% | 0.93 MPa | 0.74 MPa |
| **V3** | klebrig | 0.62 MPa | 90% | 1.19 MPa | 0.75 MPa |
| **Z1** | trocken | 0.68 MPa | 106% | 1.01 MPa | 0.71 MPa |
| **Z2** | trocken | 0.75 MPa | 122% | 0.85 MPa | 0.72 MPa |
| **Z3** | trocken | 0.77 MPa | 150% | 0.90 MPa | 0.66 MPa |
| **Z4** | trocken | 0.82 MPa | 152% | 0.89 MPa | 0.70 MPa |
| **Z5** | trocken | 0.66 MPa | 110% | 0.82 MPa | 0.65 MPa |
| **Z6** | trocken | 0.74 MPa | 102% | 1.17 MPa | 0.81 MPa |
| **Z7** | trocken | 0.75 MPa | 115% | 0.92 MPa | 0.74 MPa |
| **Z8** | fast trocken | 0.64 MPa | 92% | 1.10 MPa | 0.78 MPa |

### Zusammensetzungen Z9 bis Z12 und Vergleiche V4 bis V5:

Eine Zusammensetzung aus 95.9 g Polymer STP-2, 0.4 g Vinyltriethoxysilan und 3.7 g 3-Aminopropyltriethoxysilan wurde mit verschiedenen Katalysatoren in der angegebenen Menge gemäss Tabelle 3 vermengt und die Mischung wie für Zusammensetzung Z1 beschrieben auf Viskosität, Hautbildungszeit (HBZ) sowie Oberflächenbeschaffenheit geprüft. Die Ergebnisse sind in Tabelle 3 und 4 wiedergegeben. "Zus." steht für "Zusammensetzung".

**Tabelle 3:**

| **Zus.** | **Katalysator** | **Menge** | **Konzentration ¹** | **Viskosität [Pa·s]** | | | **HBZ** | |
|---|---|---|---|---|---|---|---|---|
| | | | | **frisch** | **gelagert²** | **Zunahme** | **frisch** | **gelagert²** |
| **V4** | DBU | 0.55 g | 3.8 | 48.8 | 58.1 | 19% | 127' | 155' |
| **V5** | TMG | 0.42 g | 3.8 | 44.5 | 53.4 | 20% | >12h | >12h |
| **Z9** | K-1 | 2.80 g | 3.8 | 33.8 | 38.9 | 15% | 79' | 90' |
| **Z10** | K-3 | 3.61 g | 3.8 | 27.2 | 38.8 | 43% | 194' | 103' |
| **Z11** | K-4 | 3.83 g | 3.8 | 32.1 | 42.6 | 42% | 276' | 127' |
| **Z12** | K-6 | 2.43 g | 3.8 | 30.4 | 34.0 | 12% | 121' | 97' |

| | | | | | | | | |
|---|---|---|---|---|---|---|---|---|
| ¹ mmol Amidin- oder Guanidin-Gruppen auf 100 g Silangruppen-haltiges Polymer. ² während 7 Tagen bei 60 °C in geschlossenem Gebinde. | | | | | | | | |

**Tabelle 4:**

| **Zus.** | **Oberfläche nach 24h** | **Zugfestigkeit** | **Bruchdehnung** | **E-Modul** | |
|---|---|---|---|---|---|
| | | | | **0-5%** | **0-50%** |
| **V4** | schmierig, klebrig | 0.55 MPa | 152% | 0.48 MPa | 0.44 MPa |
| **V5** | sehr stark klebrig | n.b. | n.b. | n.b. | n.b. |
| **Z9** | trocken | 0.66 MPa | 162% | 0.76 MPa | 0.53 MPa |
| **Z10** | fast trocken | 0.74 MPa | 209% | 0.54 MPa | 0.50 MPa |
| **Z11** | fast trocken | 0.67 MPa | 191% | 0.55 MPa | 0.46 MPa |
| **Z12** | trocken | 0.72 MPa | 169% | 0.61 MPa | 0.54 MPa |

| | | | | | |
|---|---|---|---|---|---|
| "n.b. steht für "nicht bestimmt" (nicht messbar) | | | | | |

### Zusammensetzungen Z13 bis Z14 und Vergleiche V6 bis V7:

In einem Planetenmischer wurden 36.2 g Polymer STP-1 oder STP-2, 60.2 g gemahlene Kreide (Omyacarb® 5 GU, von Omya), 1.2 g Thixotropierpaste hergestellt wie nachstehend beschrieben, und,
im Fall von Polymer STP-1: 1.2 g Vinyltrimethoxysilan und 1.2 g 3-Aminopropyltrimethoxysilan,
bzw. im Fall von Polymer STP-2: 1.2 g Vinyltriethoxysilan und 1.2 g 3-Aminopropyltriethoxysi lan,
sowie verschiedene Katalysatoren in der angegebenen Menge gemäss Tabelle 5 vermengt und die Mischung wie für Zusammensetzung Z1 beschrieben auf Hautbildungszeit (HBZ) und Oberflächenbeschaffenheit geprüft. Die Ergebnisse sind in Tabelle 5 wiedergegeben. "Zus." steht für "Zusammensetzung".

Die Thixotropierpaste wurde hergestellt, indem in einem Vakuummischer 300 g Diisodecylphthalat (Palatinol® Z, von BASF) und 48 g 4,4'-Methylendiphenyldiisocyanat (Desmodur® 44 MC L, von Bayer) vorgelegt und leicht aufgewärmt und anschliessend unter starkem Rühren 27 g n-Butylamin langsam zugetropft wurden. Die entstehende Paste wurde unter Vakuum und Kühlung eine Stunde weitergerührt.

**Tabelle 5:**

| **Zus.** | **Polymer** | **Katalysator,** Menge | **Konzentration ¹** | **HBZ** | **Oberfläche nach 24h** | **Zugfestigkeit** | **Bruchdehnung** | **E-Modul [MPa]** | |
|---|---|---|---|---|---|---|---|---|---|
| | | | | | | | | **0-5%** | **0-100%** |
| **V6** | STP-1 | DBU, 0.12 g | 0.8 | 25' | leicht schmierig | 2.5 MPa | 103% | 6.1 | 2.8 |
| **Z13** | STP-1 | K-1, 0.62 g | 0.8 | 13' | trocken | 2.7 MPa | 139% | 5.4 | 2.4 |
| **V7** | STP-2 | DBU, 0.40 g | 2.6 | 83' | schmierig | 2.5 MPa | 155% | 4.0 | 2.0 |
| **Z14** | STP-2 | K-1, 2.00 g | 2.6 | 57' | trocken | 3.1 MPa | 246% | 3.3 | 1.6 |

| | | | | | | | | | |
|---|---|---|---|---|---|---|---|---|---|
| ¹ mmol Amidin- oder Guanidin-Gruppen auf 100g Zusammensetzung. | | | | | | | | | |

### Zusammensetzungen Z15 bis Z17 und Vergleiche V8 bis V10

In einem Rundkolben wurden 71.1 g eines OH-terminierten linearen Polydimethylsiloxans mit einer Viskosität von ca. 50'000 mPas bei 23 °C (Wacker® Silicone Rubber Polymer FD 50, von Wacker) mit 2.6 g Vinyl-tris(methylethylket-oximo)silan vermengt und während 15 Minuten unter Vakuum gerührt. In das so erhaltene Polydimethylsiloxan mit Vinyl-bis(methylethylketoximo)silyl-Endgruppen wurden 26.3 g Trimethylsilyl-terminiertes Polydimethylsiloxan (Wacker® AK 100 Siliconöl, von Wacker) eingerührt. Diese Mischung wurde mit verschiedenen Katalysatoren gemäss nachstehender Tabelle 6 vermengt und wie für Zusammensetzung Z1 beschrieben auf Viskosität, Hautbildungszeit (HBZ), Oberflächenbeschaffenheit sowie mechanische Eigenschaften geprüft. Die Ergebnisse sind in Tabelle 6 und 7 wiedergegeben. "Zus." steht für "Zusammensetzung".

**Tabelle 6:**

| **Zus.** | **Katalysator** | **Menge** | **Konzentration ¹** | **Viskosität [Pa·s]** | | | **HBZ** | |
|---|---|---|---|---|---|---|---|---|
| | | | | **frisch** | **gelagert²** | **Zunahme** | **frisch** | **gelagert²** |
| **V8** | DBU | 0.04 g | 0.4 | 18.2 | 15.9 | -13% | 10' | 12' |
| **V9** | TMG | 0.03 g | 0.4 | 17.4 | 16.5 | -5% | 23' | 27' |
| **V10** | IBAY | 0.13 g | 0.4 | 19.7 | 19.9 | 1% | 27' | 47' |
| **Z15** | K-1 | 0.22 g | 0.4 | 17.5 | 16.7 | -5% | 16' | 16' |
| **Z16** | K-2 | 0.57 g | 0.4 | 17.4 | 15.7 | -10% | 15' | 16' |
| **Z17** | K-7 | 0.25 g | 0.5 | 12.7 | 11.8 | -7% | 23' | 25' |

| | | | | | | | | |
|---|---|---|---|---|---|---|---|---|
| ¹ mmol Amidin- oder Guanidin-Gruppen oder Metallatome auf 100 g Ketoximato-Polydimethylsiloxan Polymer. ² während 7 Tagen bei 70 °C in geschlossenem Gebinde. | | | | | | | | |

**Tabelle 7:**

| **Zus.** | **Oberfläche nach 24h** | **Zugfestigkeit** | **Bruchdehnung** | **E-Modul** | |
|---|---|---|---|---|---|
| | | | | **0-5%** | **0-50%** |
| **V8** | trocken | 0.22 MPa | 135% | 0.17 MPa | 0.13 MPa |
| **V9** | trocken | 0.15 MPa | 86% | 0.17 MPa | 0.16 MPa |
| **V10** | trocken | 0.25 MPa | 116% | 0.17 MPa | 0.18 MPa |
| **Z15** | trocken | 0.20 MPa | 188% | 0.18 MPa | 0.15 MPa |
| **Z16** | trocken | 0.23 MPa | 259% | 0.18 MPa | 0.15 MPa |
| **Z17** | trocken | 0.23 MPa | 276% | 0.17 MPa | 0.14 MPa |

### Zusammensetzungen Z18 bis Z21 und Vergleiche V11 bis V12

In einem Kunststoffbecher wurden 20.2 g einer ersten Komponente bestehend aus 99 Gewichtsteilen (GT) eines OH-terminierten linearen Polydimethylsiloxans mit einer Viskosität von ca. 50'000 mPas bei 23 °C (Wacker® Silicone Rubber Polymer FD 50, von Wacker) und 1 GT Wacker® E 2 Siliconöl-Emulsion (nichtionisch in Wasser emulgiertes mittelviskoses OH-terminiertes lineares Polydimethylsiloxan, von Wacker; Feststoffgehalt 37-40%) mit einer zweiten Komponente bestehend aus 0.80 g Vinyltrimethoxysilan und einem Katalysator in der in der Tabelle 8 angegebenen Art und Menge innig vermischt und die Mischung wie für Zusammensetzung Z1 beschrieben auf Hautbildungszeit (HBZ) und Oberflächenbeschaffenheit geprüft. Weiterhin wurde die applizierte Mischung nach 7 Tagen im Normklima auf Shore A-Härte geprüft. Die Ergebnisse sind in Tabelle 8 wiedergegeben. "Zus." steht für "Zusammensetzung".

**Tabelle 8:**

| **Zus.** | **Katalysator** | **Menge** | **Konzentration¹** | **HBZ** | **Oberfläche nach 24h** | **Shore A nach 7 d** |
|---|---|---|---|---|---|---|
| **V11** | DBU | 0.06 g | 2.0 | 55' | trocken | 3 |
| **V12** | IBAY | 0.48 g | 5.0 | 40' | trocken | <2 |
| **Z18** | K-1 | 0.30 g | 1.9 | 10' | trocken | 3 |
| **Z19** | K-2 | 0.75 g | 1.9 | 7' | trocken | 4 |
| **Z20** | K-3 | 0.40 g | 2.0 | 10' | trocken | 6 |
| **Z21** | K-4 | 0.43 g | 2.0 | 10' | trocken | 6 |

| | | | | | | |
|---|---|---|---|---|---|---|
| ¹ mmol Amidin- oder Guanidin-Gruppen oder Metallatome auf 100 g OH-terminiertes Polydimethylsiloxan. | | | | | | |

### Zusammensetzung Z22 (in situ-Herstellung des Katalysators):

Eine Zusammensetzung aus 30.0 g Polymer STP-1 und 0.15 g Vinyltrimethoxysilan wurde unter Feuchtigkeitsausschluss mit 2.0 g α,ω-Bis(3-aminopropyl)-poly(dimethylsiloxan) mit einem mittleren Molekulargewicht von ca. 1050 g/mol (Wacker® Aminöl SLM 92503, von Wacker; Aminzahl 109 mg KOH/g) und 0.4 g N,N'-Diisopropylcarbodiimid vermengt, die Mischung in eine innenlackierte Aluminiumtube abgefüllt und im Ofen auf 80 °C erwärmt. Nach den in der Tabelle 9 angegebenen Zeitabständen wurde die Mischung auf Hautbildungszeit (HBZ) im Normklima sowie auf den Umsatz des Carbodiimids (via Abnahme der Intensität der Carbodiimid-Bande bei ca. 2120 cm⁻¹ im FT-IR, Intensität zu Beginn = 0% Umsatz, keine Bande mehr nachweisbar = 100% Umsatz) geprüft. Die Ergebnisse sind in Tabelle 9 wiedergegeben.

**Tabelle 9:**

| **Zeit** | **HBZ** | **Carbodiimid-Umsatz** |
|---|---|---|
| 0h | 3h 15' | 0% |
| 2h | 32' | 22% |
| 4h | 19' | 50% |
| 6h | 15' | 74% |
| 24h | 14' | 100% |

## Patentansprüche

1. Katalysator enthaltend mindestens eine Amidin- oder Guanidingruppe der Formel (la) oder (Ib), welche an ein Siliciumatom eines Siloxan-Rests gebunden ist, 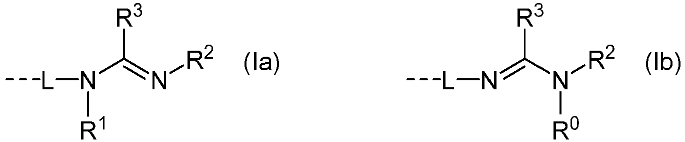 wobei
L für einen linearen oder verzweigten, zweiwertigen Kohlenwasserstoff-Rest mit 1 bis 20 C-Atomen, welcher gegebenenfalls ein oder mehrere Stickstoffatome aufweist, steht,
R¹ und R⁰ unabhängig voneinander jeweils für einen Wasserstoff-Rest oder für einen Alkyl- oder Cycloalkyl- oder Aralkyl-Rest mit 1 bis 8 C-Atomen stehen,
R² für einen Wasserstoff-Rest oder für einen Alkyl-, Cycloalkyl- oder Aralkyl-Rest mit 1 bis 18 C-Atomen, welcher gegebenenfalls Heteroatome enthält und welcher gegebenenfalls endständige primäre oder sekundäre Aminogruppen aufweist, steht,
R³ für -NHR⁵ oder für einen Wasserstoff-Rest oder für einen Alkyl-, Cycloalkyl- oder Aralkyl-Rest mit 1 bis 12 C-Atomen steht,
R⁵ für einen Wasserstoff-Rest oder für einen Alkyl-, Cycloalkyl- oder Aralkyl-Rest mit 1 bis 18 C-Atomen, welcher gegebenenfalls Heteroatome enthält, steht,
wobei
R¹ auch zusammen mit R² für einen Alkylen-Rest mit 2 bis 6 C-Atomen stehen kann,
R⁰ auch zusammen mit R² für einen Alkylen-Rest mit 3 bis 6 C-Atomen, welcher gegebenenfalls Heteroatome enthält, stehen kann,
R² auch zusammen mit R³ für einen Alkylen-Rest mit 3 bis 6 C-Atomen stehen kann und
R² auch zusammen mit R⁵ für einen Alkylen-Rest mit 2 bis 12 C-Atomen stehen kann, **dadurch gekennzeichnet, dass** der Siloxan-Rest ein Polysiloxan-Rest A³ der Formel (III) ist, 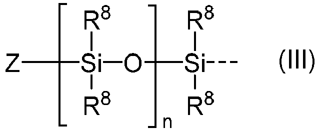 wobei
n für eine ganze Zahl im Bereich von 10 bis 200 steht,
R⁸ für einen einwertigen Kohlenwasserstoff-Rest mit 1 bis 12 C-Atomen steht und
Z für eine Amidin- oder Guanidingruppe der Formel (la) oder (Ib) oder für eine Aminoalkylgruppe oder für einen Rest R⁹ steht, wobei R⁹ für einen einwertigen Alkyl- oder Alkoxy-Rest mit 1 bis 6 C-Atomen steht.

2. Katalysator nach Anspruch 1, **dadurch gekennzeichnet, dass** der Polysiloxan-Rest A³ ein mittleres Molekulargewicht im Bereich von 354 bis 15'000 g/mol hat.

3. Katalysator nach einem der Ansprüche 1 oder 2, **dadurch gekennzeichnet, dass** R³ für einen Wasserstoff-Rest oder für einen Alkyl-, Cycloalkyl- oder Aralkyl-Rest mit 1 bis 12 C-Atomen steht.

4. Katalysator nach einem der Ansprüche 1 oder 2, **dadurch gekennzeichnet, dass** R³ für -NHR⁵ steht,
R² und R⁵ unabhängig voneinander jeweils für einen Alkyl-, Cycloalkyl- oder Aralkyl-Rest mit 1 bis 18 C-Atomen, welcher gegebenenfalls Heteroatome enthält, stehen, und
R¹ für einen Wasserstoff-Rest steht.

5. Verfahren zur Herstellung eines Katalysators nach Anspruch 3, **dadurch gekennzeichnet, dass** mindestens ein Siloxanamin mit mindestens einem Orthoester oder mindestens einem 1,3-Ketoester oder mindestens einem Nitril umgesetzt wird.

6. Verfahren zur Herstellung eines Katalysators nach Anspruch 4, **dadurch gekennzeichnet, dass** mindestens ein Siloxanamin mit mindestens einem Carbodiimid der Formel R⁵-N=C=N-R² umgesetzt wird.

7. Verwendung eines Katalysators nach einem der Ansprüche 1 bis 4 in einer härtbaren Zusammensetzung als Vernetzungskatalysator.

8. Verwendung nach Anspruch 7, **dadurch gekennzeichnet, dass** die härtbare Zusammensetzung einen Klebstoff, einen Dichtstoff oder eine Beschichtung darstellt.

9. Härtbare Zusammensetzung umfassend mindestens einen Katalysator nach einem der Ansprüche 1 bis 4.

10. Härtbare Zusammensetzung nach Anspruch 9, **dadurch gekennzeichnet, dass** sie zusätzlich mindestens ein Silangruppen-haltiges Polymer enthält.

11. Härtbare Zusammensetzung nach Anspruch 10, **dadurch gekennzeichnet, dass** das Silangruppen-haltige Polymer ausgewählt ist aus der Gruppe bestehend aus Polysiloxanen mit endständigen Silangruppen und Silangruppen-haltigen organischen Polymeren.

## Claims

1. Catalyst comprising at least one amidine or guanidine group of the formula (Ia) or (Ib) which is bonded to a silicon atom of a siloxane radical 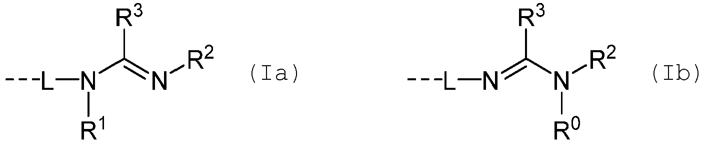 wherein
L represents a linear or branched, divalent hydrocarbon radical having 1 to 20 C atoms, which optionally contains one or more nitrogen atoms,
R¹ and R⁰ independently of each other each represent a hydrogen radical or an alkyl or cycloalkyl or aralkyl radical having 1 to 8 C atoms,
R² represents a hydrogen radical or an alkyl, cycloalkyl or aralkyl radical having 1 to 18 C atoms, which optionally contains hetero atoms and which optionally contains terminal primary or secondary amino groups,
R³ represents -NHR⁵ or a hydrogen radical or an alkyl, cycloalkyl or aralkyl radical having 1 to 12 C atoms,
R⁵ represents a hydrogen radical or an alkyl, cycloalkyl or aralkyl radical having 1 to 18 C atoms, which optionally contains hetero atoms,
wherein
R¹ together with R² can also represent an alkylene radical having 2 to 6 C atoms,
R⁰ together with R² can also represent an alkylene radical having 3 to 6 C atoms, which optionally contains hetero atoms,
R² together with R³ can also represent an alkylene radical having 3 to 6 C atoms and
R² together with R⁵ can also represent an alkylene radical having 2 to 12 C atoms, **characterized in that** the siloxane radical is a polysiloxane radical A³ of the formula (III) 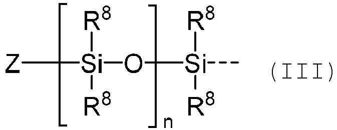 wherein
n represents an integer in the range from 10 to 200,
R⁸ represents a monovalent hydrocarbon radical having 1 to 12 C atoms and
Z represents an amidine or guanidine group of the formula (Ia) or (Ib) or an aminoalkyl group or a radical R⁹, wherein R⁹ represents a monovalent alkyl or alkoxy radical having 1 to 6 C atoms.

2. Catalyst according to Claim 1, **characterized in that** the polysiloxane radical A³ has an average molecular weight in the range from 354 to 15 000 g/mol.

3. Catalyst according to either of Claims 1 and 2, **characterized in that** R³ represents a hydrogen radical or an alkyl, cycloalkyl or aralkyl radical having 1 to 12 C atoms.

4. Catalyst according to either of Claims 1 and 2, **characterized in that** R³ represents -NHR⁵,
R² and R⁵ independently of each other each represent an alkyl, cycloalkyl or aralkyl radical having 1 to 18 C atoms, which optionally contains hetero atoms, and
R¹ represents a hydrogen radical.

5. Process for the preparation of a catalyst according to Claim 3, **characterized in that** at least one siloxane-amine is reacted with at least one ortho ester or at least one 1,3-keto ester or at least one nitrile.

6. Process for the preparation of a catalyst according to Claim 4, **characterized in that** at least one siloxane-amine is reacted with at least one carbodiimide of the formula R⁵-N=C=N-R².

7. Use of a catalyst according to one of Claims 1 to 4 in a curable composition as a crosslinking catalyst.

8. Use according to Claim 7, **characterized in that** the curable composition is an adhesive, a sealant or a coating.

9. Curable composition comprising at least one catalyst according to one of Claims 1 to 4.

10. Curable composition according to Claim 9, **characterized in that** it additionally comprises at least one polymer containing silane groups.

11. Curable composition according to Claim 10, **characterized in that** the polymer containing silane groups is selected from the group consisting of polysiloxanes having terminal silane groups and organic polymers containing silane groups.

## Revendications

1. Catalyseur contenant au moins un groupe amidino ou guanidino de formule (Ia) ou (Ib), qui est lié à un atome de silicium d'un radical siloxane, 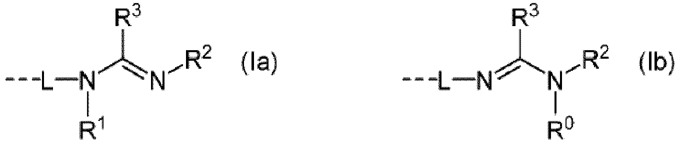 formules dans lesquelles
L représente un radical hydrocarboné divalent linéaire ou ramifié, ayant de 1 à 20 atomes de carbone, qui comporte éventuellement un ou plusieurs atomes d'azote,
R¹ et R⁰ représentent chacun indépendamment l'un de l'autre un atome d'hydrogène ou un radical alkyle ou cycloalkyle ou aralkyle ayant de 1 à 8 atomes de carbone,
R² représente un atome d'hydrogène ou un radical alkyle, cycloalkyle ou aralkyle ayant de 1 à 18 atomes de carbone, qui contient éventuellement des hétéroatomes et qui comporte éventuellement des groupes amino primaires ou secondaires en bout de chaîne,
R³ représente -NHR⁵ ou un atome d'hydrogène ou représente un radical alkyle, cycloalkyle ou aralkyle ayant de 1 à 12 atomes de carbone,
R⁵ représente un atome d'hydrogène ou un radical alkyle, cycloalkyle ou aralkyle ayant de 1 à 18 atomes de carbone, qui contient éventuellement des hétéroatomes,
R¹ pouvant également représenter conjointement avec R² un radical alkylène ayant de 2 à 6 atomes de carbone,
R⁰ pouvant également représenter conjointement avec R² un radical alkylène ayant de 3 à 6 atomes de carbone, qui contient éventuellement des hétéroatomes,
R² pouvant également représenter conjointement avec R³ un radical alkylène ayant de 3 à 6 atomes de carbone et
R² pouvant également représenter conjointement avec R⁵ un radical alkylène ayant de 2 à 12 atomes de carbone, **caractérisé en ce que** le radical siloxane est un radical polysiloxane A³ de formule (III), 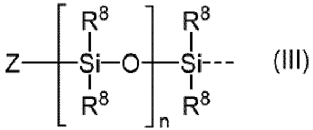 dans laquelle
n représente un nombre entier dans la plage de 10 à 200, R⁸ représente un radical hydrocarboné monovalent ayant de 1 à 12 atomes de carbone et
Z représente un groupe amidino ou guanidino de formule (Ia) ou (Ib) ou un groupe aminoalkyle ou représente un radical R⁹, R⁹ représentant un radical alkyle ou alcoxy monovalent ayant de 1 à 6 atomes de carbone.

2. Catalyseur selon la revendication 1, **caractérisé en ce que** le radical polysiloxane A³ a une masse moléculaire moyenne dans la plage de 354 à 15 000 g/mole.

3. Catalyseur selon l'une quelconque des revendications 1 et 2, **caractérisé en ce que** R³ représente un atome d'hydrogène ou un radical alkyle, cycloalkyle ou aralkyle ayant de 1 à 12 atomes de carbone.

4. Catalyseur selon l'une quelconque des revendications 1 et 2, **caractérisé en ce que** R³ représente -NHR⁵,
R² et R⁵ représentent chacun indépendamment l'un de l'autre un radical alkyle, cycloalkyle ou aralkyle ayant de 1 à 18 atomes de carbone, qui contient éventuellement des hétéroatomes, et
R¹ représente un atome d'hydrogène.

5. Procédé pour la préparation d'un catalyseur selon la revendication 3, **caractérisé en ce qu'**on fait réagir au moins une siloxane-amine avec au moins un orthoester ou au moins un 1,3-cétoester ou au moins un nitrile.

6. Procédé pour la préparation d'un catalyseur selon la revendication 4, **caractérisé en ce qu'**on fait réagir au moins une siloxane-amine avec au moins un carbodiimide de formule R⁵-N=C=N-R².

7. Utilisation d'un catalyseur selon l'une quelconque des revendications 1 à 4 dans une composition durcissable, en tant que catalyseur de réticulation.

8. Utilisation selon la revendication 7, **caractérisée en ce que** la composition durcissable est un adhésif, une matière d'étanchéité ou un revêtement.

9. Composition durcissable comprenant au moins un catalyseur selon l'une quelconque des revendications 1 à 4.

10. Composition durcissable selon la revendication 9, **caractérisée en ce qu'**elle contient en outre au moins un polymère contenant des groupes silane.

11. Composition durcissable selon la revendication 10, **caractérisée en ce que** le polymère contenant des groupes silane est choisi dans le groupe constitué par les polysiloxanes à groupes silane en bout de chaîne et les polymères organiques contenant des groupes silane.
